# EUROPÄISCHE PATENTANMELDUNG

(11) **EP 1 909 224 A1**
(43) Veröffentlichungstag der Anmeldung: **09.04.2008**
(21) Anmeldenummer: 06020814.7
(22) Anmeldetag: 04.10.2006
(51) Int. Cl.: G06Q 30/00

(54) **Anwendungsarchitektur zum Bereitstellen von Diensten auf Internetmarktplätzen**

(71) Anmelder: Deutsche Post AG, 53113 Bonn (DE)
(72) Erfinder: Mayer, Boris, D-53129 Bonn (DE); Ogilvie, Thomas, D-53179 Bonn (DE)
(74) Vertreter: Jostarndt, Hans-Dieter

(57) **Zusammenfassung**

Die Erfindung betrifft einen Netzwerkknotten zum Bereitstellen von Diensten für Nützer eines Internetmarktplatzes, der als Internetdienst in wenigstens einem Anbieterserver (100₁,...,100ₘ) eines Dienstanbieters ausgeführt wird.
Erfindungsgemäß enthält der Netzwerkknoten wenigstens einen äußeren Konnektor (30₁,...,30ₙ) zum Empfangen einer Dienstanforderung, deren Erzeugung in einem Nutzercomputer (200) eines Internetmarktplatznutzers initiierbar ist, und zum Übermitteln eines in den Anbieterserver (100₁,...,100ₘ) ermittelten Bearbeitungsergebnisses an den Nutzercomputer (200) wobei der Netzwerkknoten eine Autorisier -und Authentifiziereinheit (60) zum Überprüfen der Berechtigung des Marktplatznutzers zum Zugriff auf den Internetdienst umfasst.

## Beschreibung

Die Erfindung betrifft einen Netzwerkknoten und ein Verfahren zum Bereitstellen wenigstens eines Internetdienstes eines Dienstanbieters für Nutzer eines Internetmarktplatzes.

Zur Bereitstellung von Internetdiensten werden in der Regel Applikationen verwendet, die auf einem Internet-Server eines Dienstanbieters ausgeführt werden. Der Aufruf der Applikationen durch einen Kunden des Dienstanbieters erfolgt dabei durch eine Anforderung über eine Webseite, die von dem Dienstanbieter bereitgestellt wird.

Es ist eine Aufgabe der Erfindung, Internetdienste in einfacher Weise auf Internetmarktplätzen bereitstellen zu können und dabei insbesondere den Aufwand zur Anbindung von Internetmarktplätzen an die zur Ausführung der Internetdienste vorgesehenen Datenverarbeitungssysteme eines Dienstanbieters zu minimieren.

Erfindungsgemäß wird diese Aufgabe durch einen Netzwerkknoten mit den Merkmalen des Patentanspruchs 1 gelöst.

Erfindungsgemäß wird diese Aufgabe ferner durch ein Verfahren mit den Merkmalen des Patentanspruchs 17 gelöst.

Zweckmäßige Weiterbildungen der Erfindung sind in den Unteransprüchen angegeben.

Der Netzwerkknoten zum Bereitstellen von Diensten für Nutzer eines Internetmarktplatzes, der als Internetdienst in wenigstens einem Anbieterserver eines Dienstanbieters ausgeführt wird so ausgestaltet, dass Informationen eines Verkäufers über wenigstens einen zu verkaufenden Gegenstand erfasst und wenigstens einem Teil der Nutzer des Internetmarktplatzes zugänglich gemacht werden.

Erfindungsgemäß zeichnet sich der Netzwerkknoten dadurch aus, dass er wenigstens einen äußeren Konnektor zum Empfangen einer Dienstanforderung aufweist, deren Erzeugung in einem Nutzercomputer eines Internetmarktplatznutzers initiierbar ist, und zum Übermitteln eines in dem Anbieterserver ermittelten Bearbeitungsergebnisses an den Nutzercomputer dient, dass der Netzwerkknoten eine Autorisier -und Authentifiziereinheit zum Überprüfen der Berechtigung des Marktplatznutzers zum Zugriff auf den Internetdienst umfasst, dass die Überprüfung der Berechtigung des Marktplatznutzers zum Zugriff auf einen Internetdienst anhand eines dem Internetmarktplatz zugeordneten Marktplatzberechtigungsprofils und/oder anhand eines dem Marktplatznutzer zugeordneten Nutzerberechtigungsprofils durchführbar ist, dass der Netzwerkknoten über eine Schnittstelle mit einem Frankierdienst verbunden ist und dem Frankierdienst Daten übermittelt.

Durch den Frankierdienst können Frankierungen (Freimachungsvermerke), die als Nachweis für die Entrichtung des Beförderungsentgeltes dienen können, erzeugt werden.

Hierbei können unterschiedliche Versandarten berücksichtigt werden. Je nach Bedarf können auch zusätzlich Absender- und Empfängeradresse ausgedruckt werden.

Vorzugsweise beinhaltet der Frankierdienst Standardvorlagen für Etiketten, Transportverpackungen und/oder Briefumschläge.

Eine besonders bevorzugte Ausführungsform des Netzwerkknoten zeichnet sich dadurch aus, dass er mit einer Schnittstelle zur Eingabe von versandrelevanten Informationen verbunden ist.

Bei den versandrelevanten Informationen handelt es sich beispielsweise um Absenderdaten und/oder Empfängerdaten.

Ferner ist es zweckmäßig, dass der Nezwerkknoten mit einer Schnittstelle zur Eingabe von frankierrelevanten Informationen verbunden ist.

Zweckmäßigerweise enthalten die FRANKIERRELEVANTEN Informationen Spezifikation des Gegenstands - nachfolgend auch Versandprodukt genannt - und/oder Informationen, ob das Versandprodukt:
- noch bezahlt werden muss
- oder bereits bezahlt ist

Es ist zweckmäßig, dass die DIENSTANFORDERUNG so konfigurierbar ist, dass sie
- entweder nur versandrelevante Daten überträgt oder
- frankierrelevante Daten ohne Bezahlinformation überträgt oder
- frankierrelevante Daten mit Bezahlinformation überträgt.

In Abhängigkeit der Art der Dienstanforderung ermittelt der ANBIETERSERVER unterschiedliche Bearbeitungsergebnisse und übermittelt diese entsprechend an den Internetmarktplatz.

Eine besonders bevorzugte Ausführungsform der Erfindung zeichnet sich dadurch aus, dass die Dienstanforderung eine Information enthält, die mit einem dem Internetmarktplatz eindeutig zugeordneten Schlüssel verschlüsselt ist und in der Autorisier- und Authentifiziereinheit (60) entschlüsselbar ist.

Ferner ist es zweckmäßig, dass der äußere Konnektor mit einer Transformationseinheit zum Ermitteln wenigstens eines Anbieterservers verbunden ist.

Vorteilhafterweise dient die Transformationseinheit zur Ausführung des Internetdienstes anhand von Angaben, die in der Dienstanforderung enthalten sind, und zum Adressieren der Dienstanforderung an den ermittelten Anbieterserver.

Eine besonders bevorzugte Ausführungsform der Erfindung zeichnet sich durch wenigstens einen mit der Transformationseinheit verbundenen inneren Konnektor aus, der zum Übermitteln der Dienstanforderung an den Anbieterserver und zum Empfangen des in dem Anbieterserver ermittelten Bearbeitungsergebnisses von dem Anbieterserver dient.

Ferner ist es vorteilhaft, dass die Dienstanforderung eine Information enthält, die mit einem dem Internetmarktplatz eindeutig zugeordneten Schlüssel verschlüsselt ist und in der Autorisier- und Authentifiziereinheit entschlüsselbar ist.

Eine zweckmäßige Ausführungsform der Erfindung beinhaltet, dass es nicht zu einer automatisierten Bezahlung kommt (der Kunde also das Produkt vor dem Kauf spezifiziert und nach dem Kauf auch die Adressdaten und die Produktspezifikation an den Frankierdienst übergeben werden, jedoch dort erst dann die Bezahlung stattfindet).

Der Begriff Produktspezifikation beinhaltet eine oder mehrere der folgenden Informationen:
- Informationen über wenigstens eine Eigenschaft des Produktes, insbesondere über seine Abmessungen und/oder sein Gewicht
- Informationen zur Identifizierung eines Produkttyps oder
- Informationen zur Identifizierung eines einzelnen Produktes, beispielsweise durch eine Seriennummer.

Eine besonders bevorzugte Ausführungsform der Erfindung zeichnet sich dadurch aus, dass vor einem Verkauf eines verkaufenden Gegenstands Informationen über den Verkäufer spezifiziert werden.

Ferner ist es vorteilhaft, dass vor dem Verkauf des zu verkaufenden Gegenstands Informationen über den zu verkaufenden Gegenstand spezifiziert werden.

Eine besonders bevorzugte Ausführungsform der Erfindung zeichnet sich dadurch aus, dass nach dem Verkauf des zu verkaufenden Gegenstands die Adressdaten und/oder die Produktspezifikation an den Frankierdienst übergeben werden.

Eine besonders bevorzugte Form des Netzwerkknotenpunktes zeichnet sich dadurch aus, dass sie enthält:
- wenigstens einen äußeren Konnektor zum Empfangen einer Dienstanforderung, deren Erzeugung in einem Nutzercomputer eines Internetmarktplatznutzers initiierbar ist, und zum Übermitteln eines in dem Anbieterserver ermittelten Bearbeitungsergebnisses an den Nutzercomputer, wobei der äußere Konnektor in der Lage ist, eine an den Internetmarktplatz angepasste Formatänderung der Dienstanforderung und des Bearbeitungsergebnisses vorzunehmen,
- eine mit dem äußeren Konnektor verbundene Transformationseinheit zum Ermitteln wenigstens eines Anbieterservers zur Ausführung des Dienstes anhand von Angaben, die in der Dienstanforderung enthalten sind, und zum Adressieren der Dienstanforderung an den ermittelten Anbieterserver und
- wenigstens einen mit der Transformationseinheit verbundenen inneren Konnektor zum Übermitteln der Dienstanforderung an den Anbieterserver und zum Empfangen des in dem Anbieterserver ermittelten Bearbeitungsergebnisses von dem Anbieterserver.

Der Begriff Internetmarktplatz ist dabei im Rahmen der Erfindung in seiner weitesten Bedeutung zu verstehen und umfasst insbesondere Webportale, wie beispielsweise Auktionsportale oder Diskussionsforen im Internet sowie Webseiten, die beispielsweise von Online-Shops bereitgestellt werden.

Der Netzwerkknoten ermöglicht es, von einem Dienstanbieter bereitgestellte Internetdienste auf einem Internetmarktplatz bereitzustellen, ohne dass Anpassungen der Anbieterserver, welche die Internetdienste ausführen, an den Internetmarktplatz erforderlich sind. Die Interpretation der Dienstanforderung, d.h. insbesondere die Vornahme erforderlicher Formatänderungen, die Ermittlung des zur Ausführung des Dienstes notwendigen Anbieterservers und die Adressierung der Dienstanforderung an den Anbieterserver erfolgt in dem Netzwerkknoten, so dass die zur Ausführung des Internetdienstes erforderlichen Angaben in einer marktplatzspezifischen Weise erfasst und in die Dienstanforderung eingebracht werden können, ohne dass bereits durch den Internetmarktplatz eine Anpassung an die Erfordernisse des Anbieterservers vorgenommen werden muss.

Darüber hinaus ist die Schnittstelle zwischen dem Netzwerkknoten und dem Internetmarktplatz von der Schnittstelle zwischen dem Netzwerkknoten und dem Anbieterserver entkoppelt, wodurch eine besonders große Flexibilität bei der Anpassung des Transformationsknotens erreicht wird.

Durch die äußeren Konnektoren wird mit Vorteil erreicht, dass der Netzwerkknoten selbst in einfacher und flexibler Weise an einen Internetmarktplatz und insbesondere an ein bei der Kommunikation mit einem Internetmarktplatz verwendetes Datenformat angepasst werden kann, ohne dass bei der Anpassung Änderungen der inneren Funktionalität des Netzwerkknotens, d.h. insbesondere Anpassungen der Transformationseinheit erforderlich sind.

Der äußere Konnektor ist dabei vorzugsweise durch einen Konnektorsteckplatz mit dem Netzwerkknoten verbindbar, wobei der äußere Konnektor im laufenden Betrieb des Netzwerkknotens mit dem Netzwerkknoten verbindbar und von dem Netzwerkknoten trennbar ist.

Damit ist ein unterbrechungsfreier Betrieb des Netzwerkknotens möglich, während ein äußerer Konnektor mit dem Netzwerkknoten verbunden oder von diesem getrennt wird. Ferner können Anpassungen eines äußeren Konnektors während des laufenden Betriebs des Netzwerkknotens vorgenommen werden, indem der anzupassende äußere Konnektor von dem Netzwerkknoten getrennt, angepasst und wieder mit dem Netzwerkknoten verbunden wird.

In einer bevorzugten Ausgestaltung der Erfindung ist es vorgesehen, dass der äußere Konnektor mit wenigstens einem Nutzercomputer verbunden ist, wobei der Nutzercomputer mit einem Marktplatzserver verbunden ist.

In einer bevorzugten Ausführungsform der Erfindung erzeugt die Transformationseinheit in Abhängigkeit von dem in dem Anbieterserver ermittelten Bearbeitungsergebnis eine Benachrichtigung über das Bearbeitungsergebnis, die von dem äußeren Konnektor an den Marktplatzserver übermittelt wird.

Auf diese Weise kann eine Information über die Inanspruchnahme des Internetdienstes durch einen Marktplatznutzer an den Marktplatzserver übermittelt werden. Vorteilhaft ist es so auch möglich, dass das in dem Anbieterserver ermittelte Bearbeitungsergebnis mittelbar über den Marktplatzserver an den Nutzercomputer übermittelt wird.

In einer vorteilhaften Ausführungsform der Erfindung ist der innere Konnektor des Netzwerkknotens dazu in der Lage, eine Formatänderung des Dienstprogrammaufrufs und des Bearbeitungsergebnisses vorzunehmen.

Eine Anpassung des Netzwerkknotens an den Anbieterserver bzw. das in dem Anbieterserver ausgeführte Dienstprogramm kann somit in einfacher Weise durch eine Anpassung des inneren Konnektors vorgenommen werden, ohne dass Anpassungen der inneren Funktionalität des Netzwerkknotens und insbesondere der Transformationseinheit erforderlich sind.

Der innere Konnektor ist vorzugsweise durch einen Konnektorsteckplatz mit dem Netzwerkknoten verbindbar, wobei der innere Konnektor im laufenden Betrieb des Netzwerkknotens mit dem Netzwerkknoten verbunden und von dem Netzwerkknoten getrennt werden kann.

Somit ist es während des Betriebs des Netzwerkknotens möglich, innere Konnektoren mit dem Netzwerkknoten zu verbinden und innere Konnektoren von dem Netzwerkknoten zu trennen. Insbesondere werden damit auch Anpassungen von inneren Konnektoren während des laufenden Betriebs des Netzwerkknotens möglich, indem der anzupassende äußere Konnektor von dem Netzwerkknoten getrennt, angepasst und wieder mit dem Netzwerkknoten verbunden wird.

In einer vorteilhaften Ausgestaltung der Erfindung umfasst der Netzwerkknoten eine Autorisier- und Authentifiziereinheit zum Überprüfen der Berechtigung des Internetmarktplatznutzers zum Zugriff auf den Internetdienst.

Mittels der Autorisier- und Authentifiziereinheit kann die Berechtigung des Internetmarktplatznutzers bereits in dem Netzwerkknoten überprüft werden. Ferner kann auch eine Überprüfung der Zugriffsberechtigung für mehrere Internetdienste des Dienstanbieters erfolgen, so dass ein so genanntes single sign-on, d.h. eine zentrale Autorisierung für mehrere Dienste ermöglicht wird.

Die Erfindung beinhaltet ein Logistiksystem zum Befördern einer Postsendung auf einem Transportweg innerhalb eines Postverteilnetzes, wobei der Transportweg mehrere Knoten des Postverteilnetzes enthält, insbesondere einen Knoten, der einem Zustellpunkt entspricht, sowie wenigstens einen Knoten, der einem Sortierpunkt entspricht.

Der Begriff Logistiksystem ist im Rahmen der Erfindung in einer weiten Bedeutung zu verstehen. Er umfasst insbesondere Systeme, welche die erforderlichen Mittel und Einrichtungen enthalten, um den Transport von Postsendungen von einem Abgangsort zu einem Zustellpunkt auf einem Transportweg innerhalb eines Postverteilnetzes durchzuführen.

Bei dem Abgangsort handelt es sich beispielsweise um einen Lagerort oder Einlieferungsort des zu verkaufenden beziehungsweise verkauften Gegenstandes.

Der Zustellpunkt wird vorzugsweise von dem Käufer ausgewählt.

Die Begriffe "Verkäufer" und "Käufer" sind in ihrer weitesten Bedeutung zu verstehen. Insbesondere umfassen sie alle Entitäten, welche einen Übergang von Gegenständen vereinbaren können. Insbesondere kann es sich hierbei auch um Softwareagenten handeln. Eine Einbeziehung natürlicher oder juristischer Personen ist jedoch gleichfalls möglich.

Zweckmäßigerweise kann der Verkäufer ein Kunde (Internetmarktplatznutzer) des Internetmarkplatzes sein.

Ferner ist es vorteilhaft, wenn der Käufer ebenfalls Kunde (Internetmarktplatznutzer)des Internetmarktplatzes ist.

In einer bevorzugten Ausführungsform der Erfindung ist es vorgesehen, dass die Überprüfung der Berechtigung des Internetmarktplatznutzers zum Zugriff auf den Internetdienst anhand eines dem Internetmarktplatz zugeordneten Marktplatzberechtigungsprofils und/oder anhand eines dem Internetmarkplatznutzer zugeordneten Nutzerberechtigungsprofils durchgeführt wird.

Anhand der Berechtigungsprofile, insbesondere anhand der Benutzerberechtigungsprofile, kann vorteilhaft der Umfang, in dem ein Nutzer des Internetmarktplatzes Internetdienste des Dienstanbieters in Anspruch nehmen kann, überprüft bzw. festgestellt werden. Dabei kann das Berechtigungsprofil marktplatzbezogen und/oder nutzerbezogen vorgegeben werden, so dass für unterschiedliche Internetmarktplätze und für verschiedene Benutzer der Internetmarktplätze unterschiedliche Berechtigungen zur Inanspruchnahme eines Internetdienstes vorgesehen werden können.

Vorzugsweise enthält die Dienstanforderung eine Information, die mit einem dem Internetmarktplatz eindeutig zugeordneten Schlüssel verschlüsselt und in der Autorisier- und Authentifiziereinheit entschlüsselbar ist.

Anhand der verschlüsselten Information mit einem dem Internetmarktplatz eindeutig zugeordneten Schlüssel kann somit die Authentizität der Dienstanforderung festgestellt werden.

In einer weiteren bevorzugten Ausführungsform der Erfindung ist es vorgesehen, dass das Nutzerberechtigungsprofil in der Dienstanforderung enthalten ist.

Durch das Einbringen des Nutzerberechtigungsprofils in die Dienstanforderung, was vorzugsweise seitens des Internetmarktplatzes erfolgt, kann somit in der Dienstanforderung der Umfang angegeben werden, in dem der Marktplatznutzer Internetdienste des Dienstanbieters nutzen kann.

Vorzugsweise ist es dabei vorgesehen, dass das Nutzerberechtigungsprofil mit einem dem Internetmarktplatz eindeutig zugeordneten Schlüssel verschlüsselt ist oder mit einer digitalen Signatur des Internetmarktplatzes versehen ist.

Auf diese Weise kann die Authentizität des Nutzerberechtigungsprofils in dem Netzwerkknoten überprüft werden.

In einer weiteren vorteilhaften Ausführungsform der Erfindung ist es vorgesehen, dass die Autorisier- und Authentifiziereinheit das Nutzerberechtigungsprofil in Abhängigkeit von dem in dem Anbieterserver ermittelten Bearbeitungsergebnis verändern kann.

Hierdurch kann das Berechtigungsprofil eines Internetmarktplatznutzers in Abhängigkeit von der Inanspruchnahme eines bestimmten Internetdienstes des Dienstanbieters verändert werden.

Vorzugsweise ist es dabei vorgesehen, dass die Autorisier- und Authentifiziereinheit das Nutzerberechtigungsprofil in Abhängigkeit einer Anzahl von für einen Marktplatznutzer ermittelten Bearbeitungsergebnissen verändern kann.

In einer weiteren vorteilhaften Ausgestaltung der Erfindung umfasst der Netzwerkknoten eine Prüfeinheit zum Überprüfen des in dem Anbieterserver ermittelten Bearbeitungsergebnisses.

Vorzugsweise ist die Prüfeinheit dabei in der Lage, eine Vollständigkeit des Bearbeitungsergebnisses zu überprüfen.

Mittels der Prüfeinheit kann somit die Korrektheit und Vollständigkeit des Bearbeitungsergebnisses festgestellt werden. Dies kann beim Vorliegen eines Fehlers in dem Bearbeitungsergebnis beispielsweise dazu genutzt werden, innerhalb des Netzwerkknotens Benachrichtigungen über das Vorliegen eines Fehlers zu erzeugen und an den Nutzercomputer des Internetmarktplatznutzers zu übermitteln.

In einer weiteren vorteilhaften Ausgestaltung der Erfindung ist es vorgesehen, dass der Netzwerkknoten eine Berichtseinheit zum Erfassen und Auswerten der Dienstanforderungen und der Bearbeitungsergebnisse aufweist.

Die Erfindung beinhaltet ferner ein Verfahren zum Bereitstellen wenigstens eines Internetdienstes, das in wenigstens einem Anbieterserver eines Dienstanbieters ausgeführt wird. Dieses Verfahren umfasst die folgenden Schritte:
- Empfangen einer in einem Nutzercomputer initiierten Dienstanforderung in einem äußeren Konnektor eines Netzwerkknotens,
- Ermitteln eines Anbieterservers anhand von Angaben, die in der Dienstanforderung enthalten sind, und Adressieren der Dienstanforderung an den Anbieterserver,
- Übermitteln der Dienstanforderung an den Anbieterserver,
- Ermitteln eines Bearbeitungsergebnisses in dem Anbieterserver und Übermitteln des Bearbeitungsergebnisses an den Netzwerkknoten und
- Empfangen des Bearbeitungsergebnisses in dem Netzwerkknoten und Übermitteln des Bearbeitungsergebnisses an den Nutzercomputer.

Vorteilhafte Weiterbildungen der Erfindung im Hinblick auf das Verfahren entsprechen den im Zusammenhang mit dem Netzwerkknoten beschriebenen Ausführungsformen der Erfindung.

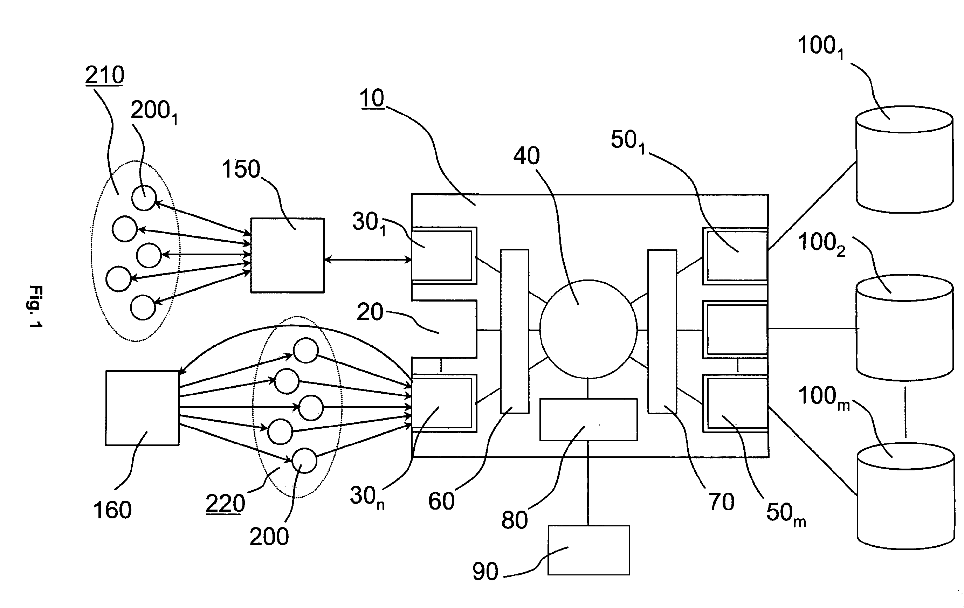

Weitere Besonderheiten und zweckmäßige Weiterbildungen der Erfindung ergeben sich aus den Unteransprüchen und der folgenden Darstellung bevorzugter Ausführungsbeispiele der Erfindung anhand der Figur 1.

Die Figur 1 zeigt eine schematische Darstellung einer Ausführungsform des erfindungsgemäßen Netzwerkknotens 10 mit angebundenen Internetmarktplätzen und Anbieterservern 1001,...,100m zur Ausführung von Dienstprogrammen.

Ein Verkäufer möchte im Internet eine Ware veräußern. Die zugehörige Einrichtung wird nachfolgend Marktplatz genannt. Dies kann durch bevorzugte Ausgestaltungen des Markplatzes erfolgen, beispielsweise:
einen Webshop
eine Verkaufsplattform
eine Auktionsplattform.

Zu diesem Zweck spezifiziert der Verkäufer den zu verkaufenden Gegenstand (z.B. Beschreibung des zu verkaufenden Gegenstandes, Visualisierung etc.) Hierfür werden beispielsweise verwendet (nachfolgend Listingtools genannt):
Online Shopsoftware (z.B. von 1und1)
Spezielle Auktionssoftware (z.B. AuctionWeb, Verkaufsmanager Pro von eBay)
Weboberfläche, die vom Marktplatz zur Verfügung gestellt wird (z.B. bei eBay oder Amazon)

Der Begriff Listingtool umfasst alle Dienste, die es ermöglichen, Produktinformationen darzustellen und/oder weiterzuleiten.

Es ist zweckmäßig, dass die Daten von dem Marktplatz und/oder von einem Listingtool automatisiert an den Frankierdienst übergeben werden.

In einer bevorzugten Ausgestaltung der Erfindung kann Weiterleitung an eine zur Bearbeitung von Dienstanforderungen ausgerüstete Datenverarbeitungseinheit, insbesondere einen Computer, erfolgen.

Weitere Eingabemöglichkeiten sind z.B. schriftliche Erfassung und spätere Digitalisierung, beispielsweise durch eine Dienstleistungseinheit.

Es ist vorteilhaft, dass Nutzer auch bereits das Versandprodukt und die zugehörigen Versandkosten festlegen können.

Dies gilt insbesondere im Kontext dieses Spezifikationsprozesses.

Hierzu wird eine Auswahlmöglichkeit für die durch den Verkäufer anzubietenden Versandsservices angeboten. Dieses Auswahlfeld ist optimalerweise dynamisch und über eine Schnittstelle mit dem Produkt-/Preissystem eines Versanddienstleisters verbunden, so dass immer das korrekte Preis- und Produktportfolio dargestellt wird.

Die Auswahl eines Versandservices durch den Verkäufer bedingt außerdem, dass in den Eingabesystemen folgende Bedingung etabliert wird: Wenn ein Gegenstand verkauft wird, werden automatisiert übergeben:
Absenderdaten
Empfängerdaten
sowie Informationen zur Spezifizierung des ausgewählten Versandprodukts.

Vorzugsweise erfolgt die Datenübergabe über eine Schnittstelle in Form eines spezifizierten Parameter-Sets bzw. nach einer spezifischen Konvention festgelegten Datensatzes an den Frankierdienst.

Der Gegenstand - nachfolgend auch als Artikel bezeichnet - wird entsprechend der Spezifikationsdaten, die die Versandinformationen und -konditionen enthalten, in den beschriebenen Marktplätzen veröffentlicht.

Käufer sehen neben den Artikelspezifikationen so auch die vom Verkäufer ausgewählten Versanddaten.

Nach dem Erwerb eines Artikels durch einen Käufer - beispielsweise durch das Ende einer Auktion oder den Erwerb zu einem Festpreis - beginnt der Prozess der Versandabwicklung, der durch die vorliegende Erfindung optimiert wird.

Vorzugsweise werden die versand- und/oder frankierrelevanten Daten vom Marktplatz bzw. der Listingtools automatisiert - d.h. ohne weiteres Zutun des Verkäufers - über eine Schnittstelle an den Frankierdienst übergeben.

Es ist zweckmäßig, dass die Daten von dem Marktplatz und/oder von dem Listingtool über den Anbieterserver bereitgestellt werden.

Auf Basis der versand- und/oder frankierrelevanten Daten erzeugt der Frankierdienst das entsprechende Frankierlabel und übermittelt dieses über eine Schnittstelle automatisiert an den Verkäufer.

Dies kann beispielsweise auf folgende Arten geschehen:
- per eMail an den Verkäufer,
- über die beschriebene Schnittstelle als Datensatz (z.B. Pdf),
- direkt auf die beschriebenen Marktplätze oder Listingtools, über die der Verkäufer das Versandlabel dann abrufen kann,
- als reiner Datensatz, wobei die Erzeugung des Labels erst durch ein in den Marktplatz oder das Listingtool integriertes Programm veranlasst wird, oder
- durch Zusendung als physisches Label, das vom Versanddienstleister produziert und dem Verkäufer zugestellt wird.

Es ist vorteilhaft, dass die Daten von dem Marktplatz und/oder von dem Listingtool durch eine automatisierte Dienstanforderung an den Frankierdienst übergeben werden.

Ferner ist es zweckmäßig, dass die Dienstanforderung in Form eines Parameter-Sets und/oder einer spezifischen Datensyntax übergeben wird.

Es ist vorteilhaft, dass die Dienstanforderung in einem Bereich des Anbieterservers des Versanddienstleisters transformiert wird.

Ferner ist es zweckmäßig, dass Adressdaten an den Frankierdienst übermittelt werden.

Es ist vorteilhaft, dass eine Produktspezifikation an den Frankierdienst übermittelt wird.

Die Abrechnung der Versanddienstleistung kann auf verschiedene Arten erfolgen:

Die Leistung wird dem Verkäufer vom Versanddienstleister in Rechnung gestellt (Voraussetzung: Bankdaten sind beim Versanddienstleister hinterlegt - z.B. Kunde ist Vertragskunde - und die Authentifizierung des Kundens erfolgt durch ein identifizierendes Kennzeichen in dem dargestellten Parameter-Set).

Die Versanddienstleistung wird durch den Marktplatz oder den Betreiber des Listingtools mit dem Verkäufer abgerechnet. Der Versanddienstleister übergibt in diesem Fall Informationen an den Marktplatzbetreiber bzw. Betreiber des Listingstools über die in Anspruch genommenen Versandservices eines Verkäufers und rechnet dann im Nachgang mit dem Marktplatz oder dem Betreiber des Listingtools die durch N (natürliche Zahl) Verkäufer in Anspruch genommenen Versanddienstleistungen ab.

In einer bevorzugten Ausgestaltung der Erfindung überweist der Käufer die Kosten für den erworbenen Artikel sowie die Versandkosten an den Verkäufer. Im Kontext dieses Überweisungsprozesses wird automatisiert (z.B. über den Verwendungszweck identifiziert) der Versandkostenanteil abgezogen und an den Versanddienstleister abgeführt. Erst wenn das Geld beim Versanddienstleister eingegangen ist, wird - automatisiert wie beschrieben - das Versandlabel an den Verkäufer übergeben.

Es ist vorteilhaft, dass bei Einlieferung des Gegenstands und/oder bei der Übermittlung von Versanddaten an den Frankierdienst eine automatische Abbuchung des Portowerts von einem Konto des Verkäufers erfolgt.

Optional kann der Verkäufer bereits im Prozessschritt eine Vorbezahlung des Portowerts vorgenommen haben, bzw. seine Einwilligung gegeben haben, dass nach dem Verkauf des Artikels und der Lieferung der Versanddaten an den Frankierdienst eine automatische Abbuchung des Portowerts von einem Konto des Verkäufers erfolgt.

Alternativ ist es möglich, dass nach dem Verkauf des Gegenstands und der Übermittlung von Versanddaten an den Frankierdienst eine automatische Abbuchung des Portowerts von einem Konto des Käufers erfolgt.

In einer weiteren vorteilhaften Ausgestaltung der Erfindung kann der Verkäufer als Einlieferungskanal eine (erste) elektronische Paketfachanlage (Packstation) auswählen.

Ferner ist es vorteilhaft, die Erfindung so in ein Logistiksystem zu integrieren, dass der Empfänger als Auslieferadresse eine (zweite) Packstation auswählen kann.

Die Auswahl einer Packstation als Auslieferadresse erfolgt vorzugsweise unabhängig von der Auswahl des Einlieferungskanals. Insbesondere ist es möglich und zweckmäßig, dass eine Packstation auch dann als Auslieferadresse gewählt wird, wenn für die Einlieferung ein anderer Einlieferungskanal - beispielsweise eine Abholung bei dem Verkäufer - gewählt wird.

Die Erfindung eignet sich für einen Transport der Gegenstände über beliebig weite Strecken einschließlich des weltweiten Transports der Gegenstände.

Es ist jedoch auch möglich, mit Hilfe der Erfindung eine Vor-Ort-Verkaufseinrichtung - beispielsweise als ein automatisiertes Ladenlokal - bereitzustellen.

Dies geschieht beispielsweise durch eine Ausgestaltung, bei der die erste Packstation und die zweite Packstation identisch sind.

Ferner ist es vorteilhaft, dass das Versandentgelt automatisch ermittelt wird.

Eine bevorzugte Ausgestaltung der Erfindung ist dadurch gekennzeichnet, dass das Versandentgelt in Abhängigkeit von der Einlieferungs- und/oder Absenderadresse ermittelt wird.

Besonders zweckmäßig ist folgende Kombination dieser Merkmale: Falls der Verkäufer als Einlieferungskanal oder der Empfänger als Auslieferadresse eine elektronische Packstation oder einen anderen spezifischen Adresstyp gewählt haben, wird das Versandentgelt in Abhängigkeit der Einlieferungs- und/oder Absenderadresse automatisch ermittelt wird.

Erfindungsgemäß besteht auch die Möglichkeit dass, wenn der Käufer eine Lieferung an die elektronische Paketfachanlage - nachfolgend Packstation genannt - wünscht, aber nicht Packstationkunde ist, die beim Marktplatz vorliegenden Daten (z.B. eMail Adresse) genutzt oder ergänzende Daten (z.B. Mobilfunknummer) einmalig abgefragt werden, so dass die Sendung auch an eine Packstation ausgeliefert werden kann.

In diesem Fall würde der Käufer wie beim bestehenden Packstation Prozess für registrierte Kunde eine Benachrichtigung erhalten, die einen Transaktionscode enthält, mit dem die Sendung an der Packstation ausgelöst werden kann.

In einem besonders vorteilhaften Fall wird das Entgelt für den Warenwert durch den eine elektronische Treuhandeinheit, insbesondere einen Paymentprovider, den Marktplatz oder das Listingtool treuhänderisch so lange zurückgehalten, bis die Ware an den Käufer ausgeliefert worden ist, wobei die einzelnen Schritte hierfür folgendermaßen aussehen könnten und gleichzeitig eine Automatisierung (Push-Funktion) für Tracking & Tracing (T&T) umfasssen:

Die Informationen des auf dem Versandlabel aufgebrachten Identifizierers (z.B Barcode) werden auch als Datensätze über eine Schnittstelle in die Applikation zur Verwaltung von Auktionen (sowohl käufer- als auch verkäuferseitig) gespeichert und an den Paymentprovider übertragen.

Diese Applikation fragt regelmäßig automatisiert bei einer T&T Datenbank des Versanddienstleisters ab, ob es einen neuen Trackevent für den betreffenden Identcode gibt.

Alternativ wird der über das oben dargestellte Verfahren erzeugte Identifizierer nach Auslieferung an und Ausdruck durch den Verkäufer in die T&T Datenbank übertragen und dort "geflaggt", so dass, wann immer ein neues T&T Event vorliegt, dieses proaktiv an die Applikation des Auktionshauses/Marktplatzes übertragen wird.

Für den Fall, dass es einen neuen Trackevent gibt, wird in der Applikation für den Verkäufer und Käufer dieser neue Status automatisch sichtbar gemacht.

Als Trackevent wird die Erfassung und/oder Übermittlung einer Information über eine Änderung eines Beförderungstatus einer Sendung bezeichnet, beispielsweise ihre Abholung oder Auslieferung.

Sobald die Sendung ausgeliefert worden ist (also Trackevent: Sendung ausgeliefert), wird dies auch dem Paymentprovider mitgeteilt, so dass erst dann das Geld für den Verkäufer freigegeben wird.

In einem Unterfall kann es sich hierbei um eine Nachnahmezahlung handeln, d.h. sofort nach Auktionsende kann der Käufer als Zahloption Nachnahme auswählen. In diesem Fall erhält der Verkäufer sofort das Versandlabel. Der Prozess ist ansonsten identisch, nur dass der Nachnahmebetrag vom Logistiker an den Paymentprovider übergeben wird, dieser jedoch mit dem Auslieferungsscan bereits das Geld für den Verkäufer freigibt.

Nach Ende der Auktion erhält der Verkäufer einen Link zur Verfügung gestellt, über den er das erstellte und bezahlte Label - hierbei handelt es sich je nach Ausgestaltung um das Versandlabel und/oder um das Frankierlabel - per Mausklick abrufen kann (z.B. als PDF oder in Form einer HTML Seite, wobei die Adressdaten automatisiert übernommen werden und auch das vorausgewählte Produkt und die damit zusammenhängende Bezahlung berücksichtigt wird).

Alternativ erhält er das Label als Datei zugeschickt oder erhält einen Gutscheincode, über den er das Label an einem Verkaufsort (z.B. einer Packstation) abholen kann.
Durch diesen Prozess wird der Abwicklungsaufwand beim Verkauf von Artikeln über einen Marktplatz in Bezug auf die Versandabwicklung optimiert, da das fertige und bezahlte Versandlabel nach der Auktion ohne weitere Handlingsaufwände sofort angeboten wird und nur noch ausgedruckt werden muss.

Es ist besonders vorteilhaft, Tracking & Tracing zu integrieren. Dies geschieht zweckmäßigerweise durch ein elektronisches System zur Sendungsverfolgung, wobei der Begriff Tracking die Ermittlung des aktuellen Status einer Sendung bezeichnet. Der Begriff Tracing beschreibt die Tatsache, dass der genaue Sendungsverlauf (insbesondere der Transportweg der Sendung) nachträglich mit allen wichtigen Ereignissen rekonstruierbar ist.

Eine besonders bevorzugte Implementierung der Erfindung soll an dem Ausführungsbeispiel eines Netzwerkknotens 10 erläutert werden, der im Folgenden als Transformationsknoten bezeichnet wird.

Über das Internet ist der Transformationsknoten 10 an mehrere Internetmarktplätze angebunden. Beispielhaft sind in der Figur 1 dabei Anbindungen an zwei Internetmarktplätze dargestellt, die in unterschiedlichen Ausführungsformen realisiert sind.

In einem der dargestellten Fälle ist der Transformationsknoten 10 mit einem Marktplatzserver 150 eines Internetmarktplatzes verbunden, auf den Nutzer des Marktplatzes ihrerseits mittels Nutzercomputern 200 zugreifen. Die Gruppe der Nutzercomputer 200 der Markplatznutzer ist in der Figur 1 mit der Bezugsziffer 210 versehen. Eine direkte Verbindung zwischen den Nutzercomputern 200 und dem Transformationsknoten 10 besteht dabei nicht, so dass der Datenaustausch zwischen den Nutzercomputern 200 und dem Transformationsknoten 10 über den Marktplatzserver 150 erfolgt. Ein derartiger Internetmarktplatz wird im Folgenden als Transitmarktplatz bezeichnet und der Marktplatzserver 150 eines derartigen Internetmarktplatzes als Konsolidatorquelle.

In dem weiteren dargestellten Fall sind die Nutzercomputer 200 sowohl mit dem Transformationsknoten 10 als auch mit dem Marktplatzserver 160 verbunden, so dass ein Datenaustausch unmittelbar zwischen den Computern 200 und dem Transformationsknoten 10 erfolgen kann. Ein derart ausgeführter Internetmarktplatz wird im Folgenden als Flächenmarktplatz bezeichnet und der Marktplatzserver 160 eines solchen Internetmarktplatzes als Streuquelle. Die Gruppe der Nutzercomputer 200, der Markplatznutzer ist in diesem Fall mit der Bezugsziffer 220 versehen.

Der Zugriff auf den Internetmarktplatz erfolgt im Falle des Transitmarktplatzes und im Falle des Flächenmarktplatzes über das Internet auf einer Webseite des Internetmarktplatzes, die von dem Marktplatzserver 150, 160 bereitgestellt und mit einem Browserprogramm, das in den Nutzercomputern 200 ausgeführt wird, an einem Anzeigmittel der Nutzercomputer 200 dargestellt wird.

Der Transformationsknoten 10 enthält in einer vorteilhaften Ausführungsform der Erfindung äußere Konnektoren 30, die im Falle des Transitmarktplatzes mit der Konsolidatorquelle 150 und im Falle des Flächenmarktplatzes mit den Nutzercomputern 200 über ein Kommunikationsnetzwerk, vorzugsweise das Internet, verbunden sind. Die äußeren Konnektoren 30₁,...,30ₙ sind in Konnektorsteckplätze 20 des Transformationsknotens 10 eingesetzt.

Innerhalb des Transformationsknotens 10 besteht eine Verbindung zwischen den äußeren Konnektoren 30₁,...,30ₙ und einer Autorisier- und Authentifiziereinheit 60, die ihrerseits mit der Transformationseinheit 40 in Verbindung steht. Für eine direkte Datenübertragung zwischen den äußeren Konnektoren 50₁,...,50ₘ und der Transformationseinheit 40 kann die Autorisier- und Authentifiziereinheit 60 überbrückt werden.

Die Transformationseinheit 40 ist mit einer Prüfeinheit 70 verbunden, die ihrerseits mit inneren Konnektoren 50₁,...,50ₘ in Verbindung steht. Auch hier kann eine direkte Verbindung zwischen der Transformationseinheit 40 und den inneren Konnektoren 50₁,...,50ₘ geschaffen werden, bei welcher die Prüfeinheit 70 überbrückt wird. Die inneren Konnektoren 50₁,...,50ₘ sind ebenfalls in Konnektorsteckplätze des Transformationsknotens 10 eingesetzt und verbinden den Transformationsknoten 10 mit Servern 100₁,...,100ₘ, auf denen Dienstprogramme zur Ausführung von Internetdiensten ausgeführt werden.

Ferner umfasst der Transformationsknoten 10 eine Steuer- und Berichtseinheit 80 zur Administrierung des Transformationsknotens 10 und zur Protokollierung.

Der Transformationsknoten 10 kann als Hardware oder als Software ausgebildet sein. In einer vorteilhaften Ausführungsform der Erfindung wird er dabei in Form mehrerer Softwaremodule realisiert, die in einem Internetserver ausgeführt werden.

Den Nutzern eines Internetmarktplatzes werden Internetdienste angeboten, die von einem Dienstanbieter zur Verfügung gestellt werden, der unabhängig von dem Marktplatzbetreiber sein kann. Dienstprogramme zur Ausführung der Internetdienste werden dabei auf jeweils wenigstens einem Anbieterserver 100₁,...,100ₘ bereitgestellt, der von dem Dienstanbieter betrieben wird. Bei den Internetdiensten handelt es sich in einer vorteilhaften und später näher beschriebenen Anwendung der Erfindung um Frankier- und Logistikdienste, die beispielsweise eine Erzeugung von elektronischen Frankiervermerken, eine Erzeugung von Adressetiketten für den Versand von Postsendungen oder eine Sendungsverfolgung (Tracking) von Postsendungen ermöglichen, und von einem Logistikdienstleister angeboten werden.

Die Anforderung der Internetdienste wird mittelbar oder unmittelbar auf einer Webseite des Internetmarktplatzes beispielsweise durch die Betätigung einer auf der Webseite angeordneten Schaltfläche initiiert. Die Erfindung ermöglicht es dabei, dass ein Internetdienst nicht auf einer Webseite des Dienstanbieters, sondern direkt auf der Webseite des Internetmarktplatzes angefordert werden kann. Insbesondere können dabei auch Webseiten, die bei der Ausführung des Dienstes gegebenenfalls als Bearbeitungsergebnis bzw. Teil-Bearbeitungsergebnis angezeigt werden, dem Erscheinungsbild der Webseiten des Internetmarktplatzes in einfacher Weise durch den Transformationsknoten 10 angepasst werden.

Mit dem Aufruf des Internetdienstes auf der Webseite des Internetmarktplatzes ist die Erzeugung einer Dienstanforderung verbunden, die insbesondere Angaben zur Ausführung des Internetdienstes enthält. Dabei handelt es sich beispielsweise um Nutzerdaten des Marktplatznutzers, die dieser in einem Dialogfeld der Webseite eingeben kann oder die in einer Datenbank des Marktplatzbetreibers gespeichert sind. Ferner enthält die Dienstanforderung Identifizierungsdaten des Internetmarktplatzes und umfasst wenigstens eine Anweisung, die es dem Transformationsknoten 10 ermöglicht, den angeforderten Internetdienst zu identifizieren. Diese Anweisung kann dabei auch implizit in der Dienstanforderung enthalten sein. So kann es beispielsweise vorgesehen sein, dass der angeforderte Internetdienst bzw. der zur Ausführung des Internetdienstes vorgesehene Anbieterserver 100₁,...,100ₘ in dem Transformationsknoten 10 anhand der Art der in der Dienstanforderung enthaltenen Angaben identifiziert wird.

Im Falle des Flächenmarktplatzes wird die Dienstanforderung durch in eine Webseite eingebrachte Skripte generiert und direkt von dem Nutzercomputer 200 über das Internet an den Transformationsknoten 10 übermittelt. Bei einem Transitmarktplatz kann die Dienstanforderung entweder durch Skripte in der Webseite des Internetmarktplatzes erzeugt und von dem Nutzercomputer 200 über die Konsolidatorquelle 150 an den Transformationsknoten 10 übermittelt werden, oder sie kann nach der Übermittlung einer entsprechenden Aufforderung von dem Nutzerzcomputer 200 an die Konsolidatorquelle 150 innerhalb der Konsolidatorquelle 150 generiert werden.

Gleichfalls ist es bei einem Transitmarktplatz möglich, dass die Dienstanforderung durch ein Skript mit dem BrowserProgramm des Nutzercomputers 200 erzeugt und durch die Konsolidatorquelle 150 beispielsweise um Identifizierungsangaben des Internetmarktplatzes, um in einer Datenbank der Konsolidatorquelle 150 gespeicherte Nutzerdaten oder um in der Datenbank der Konsolidatorquelle 150 gespeicherte Marktplatz- und/oder Nutzerberechtigungsprofile ergänzt wird. Bei einem Flächenmarktplatz werden derartige Angaben durch eine Funktionalität der in der Webseite des Internetmarktplatzes enthaltenen Skripte in die Dienstanforderung eingebracht.

Ferner ist es möglich, dass eine einzige Dienstanforderung eine Anforderung mehrerer Internetdienste enthält.

Die Verbindung zwischen dem Transformationsknoten 10 und einem Internetmarktplatz erfolgt über einen äußeren Konnektor 30₁,...,30ₙ, der individuell an den Internetmarktplatz angepasst ist. In den äußeren Konnektoren 30₁,...,30ₙ werden dabei insbesondere Formatänderungen der Dienstanforderung und der später beschriebenen, in den Anbieterservern ermittelten Bearbeitungsergebnisse vorgenommen.

Dabei handelt es sich um statische Formatänderungen, die unabhängig von dem Inhalt der Dienstanforderung vorgenommen werden. Beispiele für derartige Formatänderungen sind Umsetzungen von Protokollformaten, wie z.B. eine Umsetzung von EDIFACT-Dokumenten in XML-Dokumente und umgekehrt, sowie Änderungen von Zeichensatzkodierungen und Änderungen von Feldbezeichnungen und -reihenfolgen in der Dienstanforderung. So können beispielsweise Datensätze, wie etwa Nutzerdaten, deren Format auf die Erfordernisse des Marktplatzservers 150, 160, wie etwa ein bestimmtes in dem Marktplatzserver 150, 160 verwendetes Datenbankformat, ausgerichtet sind, konvertiert werden.

Durch die Möglichkeit der Formatänderung in den äußeren Konnektoren 30₁,...,30ₙ kann dabei sichergestellt werden, dass Änderungen, welche die Kommunikation zwischen dem Transformationsknoten 10 und einem Internetmarktplatz betreffen, keine Auswirkungen auf die innere Funktionalität des Transformationsknotens 10 und keine Auswirkung auf die Gestaltung der Anbieterserver 100₁,...,100ₘ bzw. der auf den Anbieterservern 100₁,...,100ₘ ausgeführten Dienstprogramme haben.

Zur Anbindung einer Vielzahl von Internetmarktplätzen verfügt der Transformationsknoten 10 über eine Vielzahl von Konnektorsteckplätzen 20 zur Aufnahme von äußeren Konnektoren 30₁,...,30ₙ. Dabei ist es möglich, äußere Konnektoren 30₁,...,30ₙ im laufenden Betrieb des Transformationsknotens einzustecken und zu entfernen, so dass ein unterbrechungsfreier Betrieb des Transformationsknotens 10 bei einem Hinzutreten oder einem Wegfall eines Internetmarktplatzes möglich ist. Bei Änderungen, die an einem äußeren Konnektor 30₁,...,30ₙ durchgeführt werden, kann dieser ebenfalls im aktivierten Zustand des Transformationsknotens 10 entfernt, angepasst und wieder eingesteckt werden, so dass auch hier keine Betriebsunterbrechung des Transformationsknotens 10 erforderlich ist.

Eine Dienstanforderung wird von dem Transformationsknoten 10 an demjenigen äußeren Konnektor 30₁,...,30ₙ empfangen, der dem entsprechenden Internetmarktplatz zugeordnet ist, und es wird gegebenenfalls eine Formatänderung der vorgenannten Art vorgenommen. Ein Unterschied in Bezug auf die unterschiedenen Arten von Marktplätzen besteht dabei im Grundsatz nicht.

Von einem äußeren Konnektor 30₁,...,30ₙ wird die Dienstanforderung innerhalb des Transformationsknotens 10 an eine Authentifizier- und Autorisiereinheit 60 übergeben, die zunächst in einem Authentifizierungsschritt überprüft, ob Internetdienste des Dienstanbieters grundsätzlich genutzt werden dürfen. Die Authentifizierung erfolgt dabei auf der Basis der Identität des Internetmarktplatzes und/oder auf der Basis der Identität des Marktplatznutzers.

Die Authentifizierung geschieht anhand von Authentifizierungsinformationen, die in der Dienstanforderung enthalten sind und deren Authentizität durch den Einsatz kryptografischer Verfahren sichergestellt wird. Geeignete kryptografische Verfahren sind beispielsweise digitale Signaturen der Dienstanforderung oder eines Teils davon. Ebenso kommt es in Frage, dass Inhalte der Dienstanforderung mit einem dem Internetmarktplatz oder dem Marktplatznutzer zugeordneten Schlüssel (asymmetrische Verschlüsselung mit zertifizierten Schlüsseln) oder mit einem im Vorfeld zwischen dem Transformationsknoten 10 und dem Internetmarktplatz bzw. dem Marktplatznutzer ausgetauschten symmetrischen Schlüssel (symmetrische Verschlüsselung mit "pre-shared key") verschlüsselt sind.

Ist eine erfolgreiche Authentifizierung nicht möglich, bedeutet dies, dass es sich nicht um eine authentische Dienstanforderung des Nutzers eines registrierten Internetmarktplatzes handelt oder dass der Marktplatznutzer aus anderen Gründen nicht zur Inanspruchnahme von Internetdiensten des Dienstanbieters berechtigt ist. In diesem Fall erzeugt die Autorisier- und Authentifiziereinheit 60 eine Fehlermeldung, die über den äußeren Konnektor 30₁,...,30ₙ an den Nutzercomputer 200 übermittelt wird. Ferner kann eine Protokollierung der Dienstanforderung mittels der später erläuterten Steuer- und Berichtseinheit 80 vorgesehen sein.

Nach erfolgreicher Authentifizierung stellt die Authentifizier- und Autorisiereinheit 60 in einem Autorisierungsschritt die Berechtigung des Marktplatznutzers zur Nutzung von Internetdiensten fest. Dabei wird geprüft, welche Internetdienste in welchem Umfang durch den Marktplatznutzer genutzt werden dürfen. Dies erfolgt ebenfalls auf der Basis der Identität des Internetmarktplatzes und/oder der Identität des Marktplatznutzers.

Die Autorisierung eines Internetmarktplatzes erfolgt anhand eines Marktplatzberechtigungsprofils, das vorzugsweise in der Authentifizier- und Autorisiereinheit 60 hinterlegt ist. Das Marktplatzberechtigungsprofil enthält dabei Angaben darüber, in welchem Umfang Internetdienste von Nutzern des Marktplatzes in Anspruch genommen werden können, d.h. welche Funktionen innerhalb des Internetdienstes von Nutzern des Marktplatzes ausgeführt werden können.

Die Autorisierung eines Marktplatznutzers erfolgt vorzugsweise anhand eines Nutzerberechtigungsprofils in der Dienstanforderung, das ebenfalls kryptografisch abgesichert ist. Das Nutzerberechtigungsprofil wird vorzugsweise von Seiten des Internetmarktplatzes durch den Marktplatzserver 150, 160 bzw. ein in die Webseite des Internetmarktplatzes eingebettetes Skript in die Dienstanforderung eingebracht, oder es ist in dem Transformationsknoten 10 in einer Datenbank hinterlegt. In dem Nutzerberechtigungsprofil ist dabei angegeben, in welchem Umfang der Nutzer Internetdienste des Dienstanbieters in Anspruch nehmen kann. Auf diese Weise kann der Marktplatzbetreiber die Nutzer des Internetmarktplatzes mit unterschiedlichen Zugriffsrechten für die Internetdienste des Dienstanbieters ausstatten.

Innerhalb des Internetdienstes zur Verfügung stehende Funktionen bzw. der Umfang, in dem der Internetdienst in Anspruch genommen werden kann, beziehen sich dabei beispielsweise auf verschiedene Zahlungsmöglichkeiten für die Inanspruchnahme des Internetdienstes, die Möglichkeit zur Speicherung von Daten auf dem Anbieterserver 100₁,...,100ₙ zur Wiederverwendung bei einem erneuten Zugriff sowie die Größe des dafür zur Verfügung stehenden Speicherplatzes und andere zusätzliche Dienste, die im Rahmen des Internetdienstes angeboten werden.

Zur Durchführung der Autorisierung prüft die Autorisier- und Authentifiziereinheit 60 anhand des Marktplatzberechtigungsprofils und/oder des Nutzerberechtigungsprofils, ob und in welchem Umfang der Marktplatznutzer zur Inanspruchnahme des angeforderten Internetdienstes oder der angeforderten Internetdienste berechtigt ist. Ergibt die Prüfung, dass der Marktplatznutzer keine Berechtigung zur Inanspruchnahme des angeforderten Internetdienstes oder der angeforderten Internetdienste besitzt, wird vorzugsweise eine Fehlermeldung erzeugt und über den äußeren Konnektor 30₁,...,30ₙ an den Nutzercomputer 200 des Marktplatznutzers übermittelt.

Falls die angeforderten Internetdienste erst bei einer Auswertung der Dienstanforderung in der Transformationseinheit 40 identifiziert werden kann, übergibt die Autorisier- und Authentifiziereinheit 60 das Marktplatzberechtigungsprofil bzw. das Nutzerberechtigungsprofil an die Transformationseinheit 40. Auch in diesem Fall kann jedoch innerhalb der Autorisier- und Authentifiziereinheit 60 überprüft werden, ob der Marktplatznutzer überhaupt zur Inanspruchnahme von Internetdiensten des Dienstanbieters berechtigt ist, wobei eine Fehlermeldung erzeugt und an den Nutzercomputer 200 des Marktplatznutzers übermittelt wird, wenn dies nicht der Fall ist.

In dem Fall, dass mit der Dienstanforderung mehrere Internetdienste angefordert werden, entspricht die Authentifizierung und Autorisierung in der Authentifizier- und Autorisiereinheit 60 einer Zentralanmeldung (Single Sign-on) des Marktplatznutzers für die verschiedenen Internetdienste.

Die Transformationseinheit 40 nimmt die Dienstanforderung gegebenenfalls zusammen mit den ermittelten Berechtigungsinformationen von der Authentifizier- und Autorisiereinheit 60 entgegen. Abhängig von dem Inhalt der Dienstanforderung und gegebenenfalls abhängig von den in der Authentifizier- und Autorisiereinheit 60 ermittelten Berechtigungsinformationen wird die Dienstanforderung durch die Transformationseinheit 40 konvertiert. Da die Konvertierung im Gegensatz zu der statischen Formatänderung, die in den äußeren Konnektoren 30₁,...,30ₙ vorgenommen wird, in Abhängigkeit von dem Inhalt der Dienstanforderung durchgeführt wird, wird sie hier auch als intelligente Konvertierung bezeichnet.

In der Transformationseinheit 40 werden zur intelligenten Konvertierung Prozesse ausgeführt, die eine Weiterleitung der Dienstanforderung an das betreffende auf einem der Anbieterserver 100₁,...,100ₘ ausgeführte Dienstprogramm ermöglichen. Im dem Fall, dass mit einer Dienstanforderung mehrere Internetdienste angefordert werden, erfolgt für jeden der Dienste eine Weiterleitung der Dienstanforderung oder des betreffenden Teils der Dienstanforderung an einen Anbieterserver 100₁,...,100ₘ in der im Folgenden beschriebenen Weise.

Die Transformationseinheit unternimmt dabei ein so genanntes Routing der Dienstanforderung, d.h. abhängig von ihrem Inhalt wird der Anbieterserver 100₁,...,100ₘ ermittelt, auf dem das Dienstprogramm zur Ausführung des angeforderten Internetdienstes ausgeführt wird, und die Dienstanforderung wird an diesen Anbieterserver 100₁,...,100ₘ adressiert. Ferner erfolgen weitere intelligente Konvertierungen, wie beispielsweise eine Veränderung und Ergänzung von in der Dienstanforderung enthaltenen Daten.

Bei den intelligenten Konvertierungen kann es sich beispielsweise auch um Korrekturen handeln, die sich nach Plausibilitätsprüfungen oder nach einer Anwendung von Parsing-Regeln, d.h. von Regeln zur Interpretation der Dienstanforderung, ergeben. Werden beispielsweise bei einem Internetdienst zur Erstellung von Adressetiketten Postfachinformationen in einem Datenfeld erkannt, das zur Bezeichnung der Straße vorgesehen ist, so kann dies von der Transformationseinheit 40 korrigiert werden.

Ebenso ist es im Rahmen der intelligenten Konvertierung möglich, Dienstanforderungen so zu verändern, dass statt des angeforderten Internetdienstes ein aktuellerer, verbesserter oder günstigerer Dienst (beispielsweise im Rahmen einer Sonderaktion) ausgeführt wird.

In einer bevorzugten Ausführungsform der Erfindung ist darüber hinaus ein so genanntes dynamisches Routing vorgesehen, bei dem die Verfügbarkeit der Anbieterserver 100₁,...,100ₘ ermittelt und der Dienstanforderung an einen Anbieterserver 100₁,...,100ₘ adressiert wird, für den die Verfügbarkeit festgestellt wird. Ferner kann es auch vorgesehen sein, dass mittels der Transformationseinheit 40 ein so genanntes Load Balancing vorgenommen wird, bei dem neben der Verfügbarkeit auch die Auslastung des Servers 100₁,...,100ₘ festgestellt und die Dienstanforderung an den Anbieterserver 100₁, ...,100ₘ mit der geringsten Auslastung übermittelt wird.

Nach der Bearbeitung in der Transformationseinheit 40 wird die Dienstanforderung über eine Prüfeinheit 70 oder direkt an den inneren Konnektor 50₁,...,50ₘ, übermittelt, der mit dem ermittelten Anbieterserver 100₁,...,100ₘ verbunden ist.

In einer bevorzugten Ausführungsform der Erfindung ist es dabei zudem vorgesehen, dass zusammen mit der Dienstanforderung eine authentische Zusatzinformation, beispielsweise eine verschlüsselte Information, von der Transformationseinheit 40 an den Anbieterserver 100₁,...,100ₘ übermittelt wird. Die Zusatzinformation wird dabei mit einem der Transformationseinheit 40 bzw. dem Transformationsknoten 10 eindeutig zugeordneten Schlüssel in dem Anbieterserver 100₁,...,100ₘ entschlüsselt, um zu überprüfen, ob die Dienstanforderung von dem Transformationsknoten 10 stammt. Auf eine zusätzliche Authentifizierung und/oder Autorisierung des Markplatznutzers in dem Anbieterserver 100₁,...,100ₘ kann damit in dieser Ausführungsform der Erfindung verzichtet werden.

Die inneren Konnektoren 50₁,...,50ₘ sind in der Lage, statische Formatänderungen des Dienstprogrammaufrufs vorzunehmen und sind über Konnektorsteckplätze mit dem Transformationsknoten 10 verbunden, in die bei laufendem Betrieb innere Konnektoren 50₁,...,50ₘ eingesteckt und aus denen bei laufendem Betrieb innere Konnektoren 50₁,...,50ₘ ausgesteckt werden können.

Aufgrund der Funktionsweise der inneren Konnektoren 50₁,...,50ₘ ist bei einer Anpassung der Dienstprogramme auf den Anbieterservern 100₁,...,100ₘ lediglich eine Anpassung der Konnektoren 50₁,...,50ₘ, nicht jedoch eine Anpassung der Transformationseinheit 40 erforderlich. Ferner können derartige Anpassungen auch bei laufendem Betrieb des Transformationsknotens 10 vorgenommen werden, indem die betroffenen inneren Konnektoren 50₁,...,50ₘ während der Anpassung ausgesteckt werden.

Über die inneren Konnektoren 50₁,...,50ₘ wird die Dienstanforderung dem ermittelten Anbieterserver 100₁,...,100ₘ übermittelt. Dies geschieht vorzugsweise über ein Netzwerk wie das Internet oder - wenn der Transformationsknoten 10 von dem Dienstanbieter selbst betrieben wird - über ein internes Datennetzwerk des Dienstanbieters.

Nach der Bearbeitung der Dienstanforderung in dem auf dem Anbieterserver 100₁,...,100ₘ ausgeführten Dienstprogramm, d.h. nach der Ausführung des Dienstes, sendet der Anbieterserver 100₁,...,100ₘ das Bearbeitungsergebnis, d.h. die in dem Anbieterserver 100₁,...,100ₘ bei der Ausführung des Internetdienstes bzw. des Dienstprogramms ermittelten Daten, zurück an den Transformationsknoten 10, wo es wiederum von dem inneren Konnektor 50₁,...,50ₘ empfangen wird.

Nach dem Empfang und nach der Durchführung von gegebenenfalls vorzunehmenden Formatänderungen innerhalb des inneren Konnektors 50₁,...,50ₘ wird das Bearbeitungsergebnis an die Prüfeinheit 70 übergeben, in der eine formale Überprüfung des Bearbeitungsergebnisses vorgenommen wird. Dabei wird geprüft, ob das Bearbeitungsergebnis vollständig und formal korrekt ist. Im Hinblick auf die Vollständigkeit wird dabei beispielsweise bei einer Anforderung eines digitalen Frankiervermerks durch einen Marktplatznutzer überprüft, ob das Bearbeitungsergebnis eine Druckvorlage bzw. eine Druckvorschau des Frankiervermerks umfasst. Die Kriterien zur Überprüfung sind für die Bearbeitungsergebnisse der verschiedenen Anbieterserver 100₁,...,100ₘ in einer Datenbank des Transformationsknotens 10 hinterlegt.

Sind Vollständigkeit oder Korrektheit nicht gegeben, so wird anstelle des Bearbeitungsergebnisses oder zusätzlich zu dem Bearbeitungsergebnis eine Benachrichtigung an den Nutzercomputer 200 des Marktplatznutzers übermittelt, in der auf einen Fehler hingewiesen wird.

Die Prüfeinheit 70 ist auch in der Lage, die Verfügbarkeit der Anbieterserver 100₁,...,100ₘ zu prüfen und das Ergebnis der Transformationseinheit mitzuteilen, so dass diese auf der Basis der Überprüfungsergebnisse das beschriebene dynamische Routing von Dienstanforderungen vornehmen kann.

Das geprüfte Bearbeitungsergebnis wird innerhalb des Transformationsknotens 10 entweder über die Transformationseinheit 40 oder unter Umgehung der Transformationseinheit 40 an den äußeren Konnektor 30₁,...,30ₙ geleitet, der mit dem Internetmarktplatz verbunden ist, von dem ursprünglich die Dienstanforderung stammt.

Eine weitere Bearbeitung des Bearbeitungsergebnisses in dem Transformationsknoten 40 ist dann notwendig, wenn neben einer Weiterleitung des Bearbeitungsergebnisses an den Nutzercomputer 200 des Marktplatznutzers bzw. an die Konsolidatorquelle 150 eine intelligente Verarbeitung des Bearbeitungsergebnisses vorgenommen werden soll.

Dabei kann es beispielsweise vorgesehen sein, dass im Falle eines Flächenmarktplatzes zusätzlich zu der Übermittlung des Bearbeitungsergebnisses an den Nutzercomputer 200 oder anstelle der Übermittlung des Bearbeitungsergebnisses an den Nutzercomputer 200 eine Übermittlung einer Benachrichtigung über das Bearbeitungsergebnis bzw. die Inanspruchnahme des Dienstes an die Streuquelle 160 erfolgt. Die Erzeugung dieser Benachrichtigung wird dabei in der Transformationseinheit vorgenommen. Gegenstand der Benachrichtigung kann dabei beispielsweise eine Angabe darüber sein, dass ein bestimmter Marktplatznutzer einen bestimmten Internetdienst in Anspruch genommen hat. Auf diese Weise kann das Ergebnis des Dienstes auch von der Streuquelle 160 an den Nutzercomputer 200 übermittelt werden.

Nach der optionalen Bearbeitung des Bearbeitungsergebnisses durch die Transformationseinheit 40 wird dieses entweder über die Authentifizier- und Autorisiereinheit 60 oder unter Umgehung dieser Einheit an den mit dem entsprechenden Internetmarktplatz verbundenen äußeren Konnektor 30₁,...,30ₘ geleitet.

In einer vorteilhaften Ausführungsform der Erfindung ist es dabei vorgesehen, dass das Nutzerberechtigungsprofil in der Autorisier- und Authentifiziereinheit 60 in Abhängigkeit von dem Bearbeitungsergebnis verändert werden kann.

So ist es beispielsweise möglich, Marktplatznutzern, die einen bestimmten Internetdienst häufig in Anspruch nehmen, im Rahmen eines "frequent user program" erweiterte Berechtigungen zuzuordnen, wobei die Autorisier- und Authentifiziereinheit 60 hierfür die Anzahl der an einen bestimmten Marktplatznutzer übermittelten Bearbeitungsergebnisse ermittelt.

Der äußere Konnektor 30₁,...,30ₘ nimmt die erforderlichen Formatänderungen vor, die der Formatänderung bei der Bearbeitung der Dienstanforderung in dem äußeren Konnektor 30₁,...,30ₘ entspricht oder unabhängig von dieser vorgegeben ist. Ferner können verschiedene Formatänderungen für das Bearbeitungsergebnis und für die aus dem Bearbeitungsergebnis bestimmte Benachrichtigung an die Streuquelle 160 vorgenommen werden.

Ferner ist es möglich, im Rahmen einer Konvertierung des Bearbeitungsergebnisses in der Transformationseinheit 40 oder im Rahmen der Formatänderung in dem äußeren Konnektor 30₁,...,30ₘ grafische Anpassungen des Bearbeitungsergebnisses vorzunehmen, so dass es an das Erscheinungsbild des Marktplatzes angepasst werden kann. Dies kann insbesondere dann vorgenommen werden, wenn es sich bei dem Bearbeitungsergebnis um eine Webseite mit bestimmten Informationen handelt.

Schließlich übermittelt der äußere Konnektor 30₁,...,30ₘ das Bearbeitungsergebnis an den Computer 200 des Marktplatznutzers, von dem die Dienstanforderung stammt, bzw. an die Konsolidatorquelle 150 eines Transit-Marktplatzes und gegebenenfalls zusätzlich an die Streuquelle 160 eines Flächenmarktplatzes.

Zur Administrierung und Überwachung des Transformationsknotens 10 ist eine Steuerungs- und Berichtseinheit 80 vorgesehen, die von einem Administrator bedient wird. An die Steuerungs- und Berichtseinheit 80 können ein oder mehrere externe Datenverarbeitungsgeräte 90 zur Auswertung von Nutzungsdaten des Transformationsknotens 10 angeschlossen sein.

Mittels der Steuerungs- und Berichtseinheit 80 können zum einen die Regeln zur Formatänderung in den äußeren Konnektoren 30₁,...,30ₙ und in den inneren Konnektoren 50₁,...,50ₘ, die Regeln für die Authentifizier- und Autorisiereinheit 60, die Regeln für die intelligente Konvertierung in der Transformationseinheit 40, sowie die Kriterien für die Prüfung der Bearbeitungsergebnisse in der Prüfeinheit 70 festgelegt werden. Zum anderen sind die Steuerungs- und Berichtseinheit 80 in der Lage, die Inanspruchnahme des Transformationsknotens 10 und der angeschlossenen Anbieterserver 100₁,...,100ₘ durch die Nutzer der Internetmarktplätze festzustellen und in Form von Zugriffstabellen und Statistiken zur Auswertung und Abrechnung bereitzustellen. Sämtliche Administrations- und Auswertungstätigkeiten können dabei auch über die angeschlossenen Datenverarbeitungsgeräte 90 vorgenommen werden.

Ferner können insbesondere Vergleiche zwischen dem Zeitpunkt, in dem eine Dienstanforderung in dem Transformationsknoten 10 empfangen wird und dem Zeitpunkt, in dem das Bearbeitungsergebnis von dem Transformationsknoten 10 abgesendet wird, durchgeführt werden, um so eine Bearbeitungsdauer zu ermitteln und die Einhaltung von Verfügbarkeitszusagen im Einzelfall und statistisch zu überprüfen. Hierzu werden die erforderlichen Informationen zur Auswertung von der Transformationseinheit 40 an die Steuerungs- und Berichtseinheit 80 übertragen und dort bzw. in den Datenverarbeitungsgeräten 90 ausgewertet.

Ein mögliches Anwendungsszenario der Erfindung betrifft die Bereitstellung von Frankier- und Logistikdiensten, die von einem Logistikunternehmen zur Verfügung gestellt werden, für Nutzer eines Auktionsportals, bei dem Waren im Rahmen von Auktionen von einem Verkäufer an einen Käufer versteigert werden. In der Regel werden die ersteigerten Waren dabei als Postsendung von dem Verkäufer an den Käufer geschickt.

Im Rahmen der Erfindung können den in dem Auktionsportal auftretenden Verkäufern beispielsweise folgende Internetdienste angeboten werden:
- ein Internetdienst zur Erzeugung von digitalen Frankiervermerken, die von dem Verkäufer mittels seines Nutzercomputers 200 ausgedruckt werden können.
- ein Internetdienst zur Erstellung von Adressetiketten für den Versand von versteigerten Waren.
- Internetdienste zur Bestimmung eines für die Versendung geeigneten Produkts des Logistikunternehmens und zur Ermittlung von Postleitzahlen.
- ein Internetdienst zur Sendungsverfolgung (Tracking) der versandten Postsendungen.

Ein Verkäufer kann dabei beispielsweise bei der Abwicklung einer Auktion unmittelbar auf der Webseite des Auktionsportals eine Frankierung einer Postsendung zum Versand des versteigerten Artikels anstoßen.

Zur Frankierung kann dabei ein Internetdienst zur Erstellung digitaler Frankiervermerke genutzt werden, bei dem eine Druckvorlage eines (z.B.kryptografisch abgesicherten) digitalen Frankiervermerks in dem Anbieterserver 100₁,...,100ₘ erstellt und an den Nutzercomputer 200 des Verkäufers übermittelt wird. Bei der Druckvorlage kann es sich beispielsweise um ein PDF-Dokument handeln, das mit einem an den Nutzercomputer 200 angeschlossenen Drucker ausgedruckt werden kann.

Hierbei kann beispielsweise die üblicherweise bei der Nutzung des Frankierdienstes bestehende Notwendigkeit entfallen, dass Angaben wie Absender- und Empfängeradresse, gewünschtes Produkt und Druckmedium für die Erstellung des Frankiervermerks angegeben werden müssen, da diese Angaben innerhalb des Auktionsportals bekannt sind bzw. aus bekannten Angaben abgeleitet werden können. Vielmehr werden diese Informationen daher innerhalb des Auktionsportals zusammengestellt und in der Dienstanforderung an den Transformationsknoten 10 übermittelt. Der Transformationsknoten 10 und insbesondere die Transformationseinheit 40 übernehmen die intelligente Konvertierung in der Weise, dass bestimmte Prozessschritte, die ansonsten bei der Inanspruchnahme des Frankierdienstes durchzuführen sind, übersprungen werden können. Hierdurch wird der Prozess für den Verkäufer vereinfacht und beschleunigt. So können beispielsweise die Angaben über den Empfänger der Postsendung, d.h. über den Käufer der Waren, aus Daten entnommen werden, die vor oder während der Auktion erfasst worden sind und die automatisch in die Dienstanforderung zur Inanspruchnahme des Frankierdienstes eingebracht werden können. Die Angaben über den Absender können ebenfalls von dem Internetmarktplatz bereitgestellt und automatisch in die Dienstanforderung eingebracht werden.

Im Rahmen der Bearbeitung der Dienstanforderung in dem Transformationsknoten 10 erfolgen eine Formatänderung der Dienstanforderung, eine Autorisierung der Nutzung des Frankierdienstes oder der anderen Dienste, das Routing und eine intelligente Konvertierung sowie die Weiterleitung der Dienstanforderung an den Anbieterserver 100₁,...,100ₘ, in dem der Frankierdienst ausgeführt wird.

Da es sich bei einem Auktionsportal in der Regel um einen Flächenmarktplatz handelt, wird das in dem Anbieterserver 100₁,...,100ₘ ermittelte Bearbeitungsergebnis von dem Transformationsknoten 10 unmittelbar an den Nutzercomputer 200 des Verkäufers übermittelt. In der Prüfeinheit 70 des Transformationsknotens 10 kann beispielsweise überprüft werden, ob das in dem Anbieterserver 100₁,...,100ₘ bei der Ausführung des Frankierdienstes ermittelte Bearbeitungsergebnis die Druckvorlage des digitalen Frankiervermerks enthält.

Ferner wird eine Benachrichtigung über die Ausführung des Frankierdienstes generiert und an die Streuquelle 160 des Auktionsportals übermittelt. Diese kann beispielsweise auch dazu dienen, dem Verkäufer auf der Webseite des Auktionsportals eine Information über die erfolgreiche Ausführung des Frankierdienstes anzeigen zu können.

Weiterhin ist es möglich, Zugriffslisten und Statistiken über die Nutzung der Frankier- und Logistikdienste durch Nutzer des Auktionsportals zu erstellen.
Schließlich dient der Transformationsknoten dazu, die mit dem Internetmarktplatz vereinbarten Rahmenbedingungen für die Bereitstellung der Dienste (engl. "Service Level Agreement", kurz "SLA") zu überprüfen und Abweichungen zu melden und zu dokumentieren. Wichtig in diesem Zusammenhang sind u.a. die Verfügbarkeit der Anbieterserver 100₁,...,100ₘ (d.h. Anforderungen müssen bearbeitet werden können) und die Bearbeitungsdauer (d.h. Bearbeitungsergebnisse müssen innerhalb einer bestimmten Zeit vorliegen).

### Bezugszeichenliste:

- 10: Transformationsknoten
- 20: Konnektor-Steckplatz
- 30: Äußerer Konnektor
- 40: Transformationseinheit
- 50: Innerer Konnektor
- 60: Authentifizier- und Autorisiereinheit
- 70: Prüfeinheit
- 80: Steuerungs- und Berichtseinheit
- 90: Datenverarbeitungsgerät
- 100: Anbieterserver
- 150: Konsolidatorquelle ("Transit-Marktplatz")
- 160: Streuquelle ("Flächen-Marktplatz")
- 200: Nutzercomputer

## Patentansprüche

1. Netzwerkknoten zum Bereitstellen von Diensten für Nutzer eines Internetmarktplatzes, der als Internetdienst in wenigstens einem Anbieterserver (100₁,...,100ₘ) eines Dienstanbieters ausgeführt wird, wobei Informationen eines Verkäufers über wenigstens einen zu verkaufenden Gegenstand erfasst und wenigstens einem Teil der Nutzer des Internetmarktplatzes zugänglich gemacht werden
**dadurch gekennzeichnet,**
- **dass** der Netzwerkknoten wenigstens einen äußeren Konnektor (30₁,...,30ₙ) zum Empfangen einer Dienstanforderung, deren Erzeugung in einem Nutzercomputer (200) eines Internetmarktplatznutzers initiierbar ist, und zum Übermitteln eines in dem Anbieterserver (100₁,...,100ₘ) ermittelten Bearbeitungsergebnisses an den Nutzercomputer (200) enthält,
- **dass** der Netzwerkknoten eine Autorisier -und Authentifiziereinheit (60) zum Überprüfen der Berechtigung des Marktplatznutzers zum Zugriff auf den Internetdienst umfasst,
- **dass** die Überprüfung der Berechtigung des Marktplatznutzers zum Zugriff auf einen Internetdienst anhand eines dem Internetmarktplatz zugeordneten Marktplatzberechtigungsprofils und/oder anhand eines dem Marktplatznutzer zugeordneten Nutzerberechtigungsprofils durchführbar ist, und
- **dass** der Netzwerkknoten über eine Schnittstelle mit einem Frankierdienst verbunden ist und dem Frankierdienst Daten übermittelt.

2. Netzwerkknoten nach Anspruch 1,
**dadurch gekennzeichnet,**
**dass** er mit einer Schnittstelle zur Eingabe von versandrelevanten Informationen verbunden ist.

3. Netzwerkknoten nach Anspruch 1 oder 2,
**dadurch gekennzeichnet,**
**dass** er mit einer Schnittstelle zur Eingabe von frankierrelevanten Informationen verbunden ist.

4. Netzwerkknoten nach einem der vorangegangenen Ansprüche,
**dadurch gekennzeichnet,**
**dass** die Dienstanforderung so konfigurierbar ist, dass sie
• entweder nur versandrelevante Daten überträgt oder
• frankierrelevante Daten ohne Bezahlinformation überträgt oder
• frankierrelevante Daten mit Bezahlinformation überträgt.

5. Netzwerkknoten nach einem der vorangegangenen Ansprüche,
**dadurch gekennzeichnet,**
**dass** der Anbieterserver unterschiedliche Bearbeitungsergebnisse erfasst und diese Bearbeitungsergebnisse an den Internetmarktplatz übermittelt.

6. Netzwerkknoten nach einem der vorangegangenen Ansprüche,
**dadurch gekennzeichnet,**
**dass** die Dienstanforderung eine Information enthält, die mit einem dem Internetmarktplatz eindeutig zugeordneten Schlüssel verschlüsselt ist und in der Autorisier- und Authentifiziereinheit (60) entschlüsselbar ist.

7. Netzwerkknoten nach einem der vorangegangenen Ansprüche,
**dadurch gekennzeichnet,**
**dass** der äußere Konnektor (30₁,...,30ₙ) mit einer Transformationseinheit (40) zum Ermitteln wenigstens eines Anbieterservers (100₁,...,100ₘ) verbunden ist.

8. Netzwerkknoten nach einem der vorangegangenen Ansprüche,
**dadurch gekennzeichnet,**
**dass** die Transformationseinheit (40) in Abhängigkeit von dem in dem Anbieterserver (100₁,...,100ₘ) ermittelten Bearbeitungsergebnis eine Benachrichtigung über das Bearbeitungsergebnis erzeugt, die von dem äußeren Konnektor (30₁,...,30ₙ) an den Marktplatzserver (150, 160) übermittelt wird.

9. Netzwerkknoten nach einem der vorangegangenen Ansprüche,
**dadurch gekennzeichnet,**
**dass** das Nutzerberechtigungsprofil in der Dienstanforderung enthalten ist.

10. Netzwerkknoten nach einem der vorangegangenen Ansprüche,
**dadurch gekennzeichnet,**
**dass** das Nutzerberechtigungsprofil mit einem dem Internetmarktplatz eindeutig zugeordneten Schlüssel verschlüsselt oder mit einer digitalen Signatur des Internetmarktplatzes versehen ist.

11. Verfahren zum Bereitstellen wenigstens eines Internetdienstes, der in wenigstens einem Anbieterserver (100₁,...,100ₘ) eines Dienstanbieters für Nutzer eines Internetmarktplatzes mit den folgenden Schritten ausgeführt wird:
• Empfangen einer in einem Nutzercomputer (200) initiierten Dienstanforderung in einem äußeren Konnektor (30₁,...,30ₙ) eines Netzwerkknotens (10),
• Vornehmen von Formatänderungen der Dienstanforderung in dem äußeren Konnektor (30₁,...,30ₙ),
• Ermitteln eines Anbieterservers (100₁,...,100ₘ) anhand von Angaben, die in der Dienstanforderung enthalten sind und Adressieren der Dienstanforderung an den Anbieterserver (100₁,...,100ₘ),
• Übermitteln der Dienstanforderung an den Anbieterserver (100₁,...,100ₘ),
• Ermitteln eines Bearbeitungsergebnisses in dem Anbieterserver (100₁,...,100ₘ) und Übermitteln des Bearbeitungsergebnisses an den Netzwerkknoten (10) und
• Empfangen des Bearbeitungsergebnisses in dem Netzwerkknoten (10) und Übermitteln des Bearbeitungsergebnisses an den Nutzercomputer (200).
• Übermitteln von Daten an einen Frankierdienst.

12. Verfahren nach Anspruch 11,
**dadurch gekennzeichnet,**
**dass** die dem Frankierdienst übermittelten Daten Informationen aus dem Nutzerberechtigungsprofil enthalten.

13. Verfahren nach Anspruch 11 oder 12,
**dadurch gekennzeichnet,**
**dass** die Daten von dem Marktplatz und/oder von einem Listingtool automatisiert an den Frankierdienst übergeben werden.

14. Verfahren nach Anspruch 13,
**dadurch gekennzeichnet,**
**dass** die Daten von dem Marktplatz und/oder von dem Listingtool über den Anbieterserver bereitgestellt werden.

15. Verfahren nach Anspruch 13 oder 14,
**dadurch gekennzeichnet,**
**dass** die Daten von dem Marktplatz und/oder von dem Listingtool durch eine automatisierte Dienstanforderung an den Frankierdienst übergeben werden.

16. Verfahren nach Anspruch 15,
**dadurch gekennzeichnet,**
**dass** die Dienstanforderung in Form eines Parameter-Sets und/oder einer spezifischen Datensyntax übergeben wird.

17. Verfahren nach Anspruch 15 oder 16,
**dadurch gekennzeichnet,**
**dass** die Dienstanforderung in einem Bereich des Anbieterservers des Versanddienstleisters transformiert wird.

18. Verfahren nach einem der Ansprüche 11 bis 17,
**dadurch gekennzeichnet,**
**dass** Adressdaten an den Frankierdienst übermittelt werden.

19. Verfahren nach einem der Ansprüche 11 bis 18,
**dadurch gekennzeichnet,**
**dass** eine Produktspezifikation an den Frankierdienst übermittelt wird.

20. Verfahren nach einem der Ansprüche 11 bis 19,
**dadurch gekennzeichnet,**
**dass** vor einem Verkauf eines verkaufenden Gegenstands Informationen über den Verkäufer spezifiziert werden.

21. Verfahren nach einem der Ansprüche 11 bis 20,
**dadurch gekennzeichnet,**
**dass** vor dem Verkauf des zu verkaufenden Gegenstands Informationen über den zu verkaufenden Gegenstand spezifiziert werden.

22. Verfahren nach einem der Ansprüche 11 bis 21,
**dadurch gekennzeichnet,**
**dass** nach dem Verkauf des zu verkaufenden Gegenstands die Adressdaten und/oder die Produktspezifikation an den Frankierdienst übergeben werden.

23. Verfahren nach einem der Ansprüche 11 bis 22,
**dadurch gekennzeichnet,**
**dass** nach einem Geldeingang bei dem Versanddienstleister automatisiert ein Versandlabel an den Verkäufer übergeben wird.

24. Verfahren nach einem der Ansprüche 11 bis 23,
**dadurch gekennzeichnet,**
**dass** nach dem Verkauf des Gegenstands und der Übermittlung von Versanddaten an den Frankierdienst eine automatische Abbuchung des Portowerts von einem Konto des Verkäufers erfolgt.

25. Verfahren nach einem der Ansprüche 11 bis 24,
**dadurch gekennzeichnet,**
**dass** nach dem Verkauf des Gegenstands und der Übermittlung von Versanddaten an den Frankierdienst eine automatische Abbuchung des Portowerts von einem Konto des Käufers erfolgt.

26. Verfahren nach einem der Ansprüche 11 bis 25,
**dadurch gekennzeichnet,**
**dass** der Verkäufer als Einlieferungskanal eine (erste) elektronische Paketfachanlage (Packstation) auswählen kann.

27. Verfahren nach einem der Ansprüche 11 bis 26,
**dadurch gekennzeichnet,**
**dass** der Empfänger (Käufer) als Auslieferadresse eine (zweite) Packstation auswählen kann.

28. Verfahren nach einem der Ansprüche 11 bis 25,
**dadurch gekennzeichnet,**
**dass** die erste Packstation und die zweite Packstation identisch sind.

29. Verfahren nach einem der Ansprüche 11 bis 28,
**dadurch gekennzeichnet,**
**dass** das Versandentgelt automatisch ermittelt wird.

30. Verfahren nach Anspruch 29,
**dadurch gekennzeichnet,**
**dass** das Versandentgelt in Abhängigkeit von der Einlieferungs- und/oder Absenderadresse ermittelt wird.

31. Verfahren nach einem der Ansprüche 27 bis 30,
**dadurch gekennzeichnet,**
**dass** der Käufer eine Benachrichtigung erhält, die einen Transaktionscode enthält, mit dem die Sendung an der Packstation abgeholt werden kann.

32. Verfahren nach einem der Ansprüche 11 bis 31,
**dadurch gekennzeichnet,**
**dass** eine elektronische Treuhandeinheit
das Entgelt für den Warenwert so lange zurückhält, bis die Ware an den Käufer ausgeliefert worden ist.

33. Verfahren nach Anspruch 32,
**dadurch gekennzeichnet,**
**dass** die elektronische Treuhandeinheit ein Paymentprovider ist.

34. Verfahren nach Anspruch 32,
**dadurch gekennzeichnet,**
**dass** der Marktplatz als elektronische Treuhandeinheit eingesetzt wird.

35. Verfahren nach Anspruch 32,
**dadurch gekennzeichnet,**
**dass** das Listingtool als elektronische Treuhandeinheit eingesetzt wird.

36. Verfahren nach einem der Ansprüche 11 bis 35,
**dadurch gekennzeichnet,**
**dass** der Verkäufer sofort nach Vereinbarung eines Verkaufs - insbesondere nach dem Ende einer Auktion - ein Versandlabel erhält.

37. Verfahren nach einem der Ansprüche 11 bis 36,
**dadurch gekennzeichnet,**
**dass** dem Verkäufer ein Link zur Verfügung gestellt wird, über den er das Versandlabel abrufen kann.

38. Verfahren nach einem der Ansprüche 11 bis 37,
**dadurch gekennzeichnet,**
**dass** ein Nachnahmebetrag von einem den Transport des Gegenstandes durchführenden Logistikunternehmen an den Paymentprovider übergeben wird.

39. Verfahren nach einem der Ansprüche 11 bis 38,
**dadurch gekennzeichnet,**
**dass** der äußere Konnektor (30₁,...,30ₙ) über ein Kommunikationsnetz mit wenigstens einem Nutzercomputer (200) verbunden ist, wobei der Nutzercomputer (200) über das Kommunikationsnetz mit einem Marktplatzserver (150, 160) verbunden ist.

40. Verfahren nach einem der Ansprüche 11 bis 39,
**dadurch gekennzeichnet,**
**dass** in Abhängigkeit von dem in dem Anbieterserver (100₁,...,100ₘ) ermittelten Bearbeitungsergebnis eine Benachrichtigung über das Bearbeitungsergebnis erzeugt wird, die von dem äußeren Konnektor (30₁,...,30ₙ) an den Marktplatzserver (150, 160) und/oder an den Nutzercomputer (200) direkt übermittelt wird.

41. Verfahren nach einem der Ansprüche 11 bis 40,
**dadurch gekennzeichnet,**
**dass** eine Berechtigung des Marktplatznutzers zum Zugriff auf den Internetdienst überprüft wird.

42. Verfahren nach einem der Ansprüche 11 bis 41,
**dadurch gekennzeichnet,**
**dass** die Berechtigung des Marktplatznutzers zum Zugriff auf einen Internetdienst anhand eines dem Internetmarktplatz zugeordneten Marktplatzberechtigungsprofil und/oder anhand eines dem Marktplatznutzer zugeordneten Nutzerberechtigungsprofils vorgenommen wird.

43. Verfahren nach einem der Ansprüche 11 bis 42,
**dadurch gekennzeichnet,**
**dass** in der Dienstanforderung eine verschlüsselte Information enthalten ist, die mit einem dem Internetmarktplatz eindeutig zugeordneten Schlüssel entschlüsselt wird.

## Geänderte Patentansprüche

### Geänderte Patentansprüche gemäss Regel 137(2) EPÜ.

**1.** Netzwerkknoten zum Bereitstellen von Diensten für Nutzer eines Internetmarktplatzes, der als Internetdienst in wenigstens einem Anbieterserver (100₁,..., 100ₘ) eines Dienstanbieters ausgeführt wird, wobei Informationen eines Verkäufers über wenigstens einen zu verkaufenden Gegenstand erfasst und wenigstens einem Teil der Nutzer des Internetmarktplatzes zugänglich gemacht werden,
wobei der Netzwerkknoten wenigstens einen äußeren Konnektor (30₁,...,30ₙ) zum Empfangen einer Dienstanforderung, deren Erzeugung in einem Nutzercomputer (200) eines Internetmarktplatznutzers initiierbar ist, und zum Übermitteln eines in dem Anbieterserver (100₁,...,100ₘ) ermittelten Bearbeitungsergebnisses an den Nutzercomputer (200) enthält, und
wobei der Netzwerkknoten eine Autorisier- und Authentifiziereinheit (60) zum Überprüfen der Berechtigung des Marktplatznutzers zum Zugriff auf den Internetdienst umfasst,
**dadurch gekennzeichnet,**
- **dass** die Überprüfung der Berechtigung des Marktplatznutzers zum Zugriff auf den Internetdienst anhand eines dem Marktplatznutzer zugeordneten Nutzerberechtigungsprofils durchführbar ist,
- **dass** das Nutzerberechtigungsprofil in der Dienstanforderung enthalten ist und mit einem dem Internetmarktplatz eindeutig zugeordneten Schlüssel verschlüsselt oder mit einer digitalen Signatur des Internetmarktplatzes versehen ist, und
- **dass** der Netzwerkknoten über eine Schnittstelle mit einem Frankierdienst verbunden ist und dem Frankierdienst Daten übermittelt.

**2.** Netzwerkknoten nach Anspruch 1,
**dadurch gekennzeichnet,**
**dass** er mit einer Schnittstelle zur Eingabe von versandrelevanten Informationen verbunden ist.

**3.** Netzwerkknoten nach Anspruch 1 oder 2,
**dadurch gekennzeichnet,**
**dass** er mit einer Schnittstelle zur Eingabe von frankierrelevanten Informationen verbunden ist.

**4.** Netzwerkknoten nach einem der vorangegangenen Ansprüche,
**dadurch gekennzeichnet,**
**dass** die Dienstanforderung so konfigurierbar ist, dass sie
• entweder nur versandrelevante Daten überträgt oder
• frankierrelevante Daten ohne Bezahlinformation überträgt oder
• frankierrelevante Daten mit Bezahlinformation überträgt.

**5.** Netzwerkknoten nach einem der vorangegangenen Ansprüche,
**dadurch gekennzeichnet,**
**dass** der Anbieterserver unterschiedliche Bearbeitungsergebnisse erfasst und diese Bearbeitungsergebnisse an den Internetmarktplatz übermittelt.

**6.** Netzwerkknoten nach einem der vorangegangenen Ansprüche,
**dadurch gekennzeichnet,**
**dass** die Dienstanforderung eine Information enthält, die mit einem dem Internetmarktplatz eindeutig zugeordneten Schlüssel verschlüsselt ist und in der Autorisier- und Authentifiziereinheit (60) entschlüsselbar ist.

**7.** Netzwerkknoten nach einem der vorangegangenen Ansprüche,
**dadurch gekennzeichnet,**
**dass** der äußere Konnektor (30₁,...,30ₙ) mit einer Transformationseinheit (40) zum Ermitteln wenigstens eines Anbieterservers (100₁,...,100ₘ) verbunden ist.

**8.** Netzwerkknoten nach einem der vorangegangenen Ansprüche, **dadurch gekennzeichnet,**
**dass** die Transformationseinheit (40) in Abhängigkeit von dem in dem Anbieterserver (100₁,...,100ₘ) ermittelten Bearbeitungsergebnis eine Benachrichtigung über das Bearbeitungsergebnis erzeugt, die von dem äußeren Konnektor (30₁,...,30ₙ) an den Marktplatzserver (150, 160) übermittelt wird.

**9.** Verfahren zum Bereitstellen wenigstens eines Internetdienstes, der in wenigstens einem Anbieterserver (100₁,...,100ₘ) eines Dienstanbieters für Nutzer eines Internetmarktplatzes mit den folgenden Schritten ausgeführt wird:
• Empfangen einer in einem Nutzercomputer (200) initiierten Dienstanforderung in einem äußeren Konnektor (30₁,...,30ₙ) eines Netzwerkknotens (10),
• Überprüfen der Berechtigung eines Marktplatznutzers zum Zugriff auf den Internetdienst anhand eines dem Marktplatznutzer zugeordneten Nutzerberechtigungsprofils,
• Vornehmen von Formatänderungen der Dienstanforderung in dem äußeren Konnektor (30₁,..., 30ₙ)
• Ermitteln eines Anbieterservers (100₁,...,100ₘ) anhand von Angaben, die in der Dienstanforderung enthalten sind, und Adressieren der Dienstanforderung an den Anbieterserver (100₁,...,100ₘ),
• Übermitteln der Dienstanforderung an den Anbieterserver (100₁,..., 100ₘ),
• Ermitteln eines Bearbeitungsergebnisses in dem Anbieterserver (100₁,...,100ₘ) und Übermitteln des Bearbeitungsergebnisses an den Netzwerkknoten (10) und
• Empfangen des Bearbeitungsergebnisses in dem Netzwerkknoten (10) und Übermitteln des Bearbeitungsergebnisses an den Nutzercomputer (200).
• Übermitteln von Daten an einen Frankierdienst, die Informationen aus dem Nutzerberechtigungsprofil enthalten.

**10.** Verfahren nach Anspruch 9,
**dadurch gekennzeichnet,**
**dass** die Daten von dem Marktplatz und/oder von einem Listingtool automatisiert an den Frankierdienst übergeben werden.

**11.** Verfahren nach Anspruch 10 ,
**dadurch gekennzeichnet,**
**dass** die Daten von dem Marktplatz und/oder von dem Listingtool über den Anbieterserver bereitgestellt werden.

**12.** Verfahren nach Anspruch 10 oder 11,
**dadurch gekennzeichnet,**
**dass** die Daten von dem Marktplatz und/oder von dem Listingtool durch eine automatisierte Dienstanforderung an den Frankierdienst übergeben werden.

**13.** Verfahren nach Anspruch 12,
**dadurch gekennzeichnet,**
**dass** die Dienstanforderung in Form eines Parameter-Sets und/oder einer spezifischen Datensyntax übergeben wird.

**14.** Verfahren nach Anspruch 12 oder 13,
**dadurch gekennzeichnet,**
**dass** die Dienstanforderung in einem Bereich des Anbieterservers des Versanddienstleisters transformiert wird.

**15.** Verfahren nach einem der Ansprüche 9 bis 14,
**dadurch gekennzeichnet,**
**dass** Adressdaten an den Frankierdienst übermittelt werden.

**16.** Verfahren nach einem der Ansprüche 9 bis 15,
**dadurch gekennzeichnet,**
**dass** eine Produktspezifikation an den Frankierdienst übermittelt wird.

**17.** Verfahren nach einem der Ansprüche 9 bis 16,
**dadurch gekennzeichnet,**
**dass** vor einem Verkauf eines zu verkaufenden Gegenstands Informationen über den Verkäufer spezifiziert werden.

**18.** Verfahren nach einem der Ansprüche 9 bis 17,
**dadurch gekennzeichnet,**
**dass** vor dem Verkauf des zu verkaufenden Gegenstands Informationen über den zu verkaufenden Gegenstand spezifiziert werden.

**19.** Verfahren nach einem der Ansprüche 9 bis 18,
**dadurch gekennzeichnet,**
**dass** nach dem Verkauf des zu verkaufenden Gegenstands die Adressdaten und/oder die Produktspezifikation an den Frankierdienst übergeben werden.

**20.** Verfahren nach einem der Ansprüche 9 bis 19,
**dadurch gekennzeichnet,**
**dass** nach einem Geldeingang bei einem Versanddienstleister automatisiert ein Versandlabel an den Verkäufer übergeben wird.

**21.** Verfahren nach einem der Ansprüche 9 bis 20,
**dadurch gekennzeichnet,**
**dass** nach dem Verkauf des Gegenstands und der Übermittlung von Versanddaten an den Frankierdienst eine automatische Abbuchung des Portowerts von einem Konto des Verkäufers erfolgt.

**22.** Verfahren nach einem der Ansprüche 9 bis 21,
**dadurch gekennzeichnet,**
**dass** nach dem Verkauf des Gegenstands und der Übermittlung von Versanddaten an den Frankierdienst eine automatische Abbuchung des Portowerts von einem Konto des Käufers erfolgt.

**23.** Verfahren nach einem der Ansprüche 9 bis 22,
**dadurch gekennzeichnet,**
**dass** der Verkäufer als Einlieferungskanal eine (erste) elektronische Paketfachanlage (Packstation) auswählen kann.

**24.** Verfahren nach einem der Ansprüche 9 bis 23,
**dadurch gekennzeichnet,**
**dass** der Empfänger (Käufer) als Auslieferadresse eine (zweite) Packstation auswählen kann.

**25.** Verfahren nach den Ansprüche 23 und 24,
**dadurch gekennzeichnet,**
**dass** die erste Packstation und die zweite Packstation identisch sind.

**26.** Verfahren nach einem der Ansprüche 9 bis 25,
**dadurch gekennzeichnet,**
**dass** ein Versandentgelt automatisch ermittelt wird.

**27.** Verfahren nach Anspruch 26,
**dadurch gekennzeichnet,**
**dass** das Versandentgelt in Abhängigkeit von der Einlieferungs- und/oder Absenderadresse ermittelt wird,

**28.** Verfahren nach einem der Ansprüche 24 bis 27,
**dadurch gekennzeichnet,**
**dass** der Käufer eine Benachrichtigung erhält, die einen Transaktionscode enthält, mit dem die Sendung an der Packstation abgeholt werden kann.

**29.** Verfahren nach einem der Ansprüche 9 bis 28,
**dadurch gekennzeichnet,**
**dass** eine elektronische Treuhandeinheit das Entgelt für einen Warenwert so lange zurückhält, bis die Ware an den Käufer ausgeliefert worden ist.

**30.** Verfahren nach Anspruch 29,
**dadurch gekennzeichnet,**
**dass** die elektronische Treuhandeinheit ein Paymentprovider ist.

**31.** Verfahren nach Anspruch 30,
**dadurch gekennzeichnet,**
**dass** der Marktplatz als elektronische Treuhandeinheit eingesetzt wird.

**32.** Verfahren nach den Ansprüchen 10 und 31,
**dadurch gekennzeichnet,**
**dass** das Listingtool als elektronische Treuhandeinheit eingesetzt wird.

**33.** Verfahren nach einem der Ansprüche 9 bis 32,
**dadurch gekennzeichnet,**
**dass** der Verkäufer sofort nach Vereinbarung eines Verkaufs
- insbesondere nach dem Ende einer Auktion - ein Versandlabel erhält.

**34.** Verfahren nach Anspruch 33,
**dadurch gekennzeichnet,**
**dass** dem Verkäufer ein Link zur Verfügung gestellt wird, über den er das Versandlabel abrufen kann.

**35.** Verfahren nach Anspruch 30,
**dadurch gekennzeichnet,**
**dass** ein Nachnahmebetrag von einem den Transport des Gegenstandes durchführenden Logistikunternehmen an den Paymentprovider übergeben wird.

**36.** Verfahren nach einem der Ansprüche 9 bis 35,
**dadurch gekennzeichnet,**
**dass** der äußere Konnektor (30₁,...,30ₙ) über ein Kommunikationsnetz mit wenigstens einem Nutzercomputer (200) verbunden ist, wobei der Nutzercomputer (200) über das Kommunikationsnetz mit einem Marktplatzserver (150, 160) verbunden ist.

**37.** Verfahren nach einem der Ansprüche 9 bis 36,
**dadurch gekennzeichnet,**
**dass** in Abhängigkeit von dem in dem Anbieterserver (100₁,..., 100ₘ) ermittelten Bearbeitungsergebnie eine Benachrichtigung über das Bearbeitungsergebnis erzeugt wird, die von dem äußeren Konnektor (30₁,...,30ₙ) an den Marktplatzserver (150, 160) und/oder an den Nutzercomputer (200) direkt übermittelt wird.

**38.** Verfahren nach einem der Ansprüche 9 bis 37,
**dadurch gekennzeichnet,**
**dass** in der Dienstanforderung eine verschlüsselte Information enthalten ist, die mit einem dem Internetmarktplatz eindeutig zugeordneten Schlüssel entschlüsselt wird.
